# EUROPEAN PATENT APPLICATION

(11) **EP 2 530 617 A1**
(43) Date of publication of application: **05.12.2012**
(21) Application number: 10844554.5
(22) Date of filing: 10.12.2010
(51) Int. Cl.: G06F 21/00, G06F 21/20, G06F 21/24, G06Q 50/00

(54) **CONTENT DISTRIBUTION SYSTEM, CONTENT DISTRIBUTION METHOD, APPLICATION SERVER SYSTEM, USER TERMINAL, AND RECORDING MEDIUM**

(30) Priority: 26.01.2010 JP 2010013889
(71) Applicant: NEC Corporation, Tokyo 108-8001 (JP)
(72) Inventor: NOGAMI, Kousuke, Tokyo 108-8001 (JP); SATODA, Kozo, Tokyo 108-8001 (JP)
(74) Representative: Betten & Resch
(86) International application number: PCT/JP2010/007182
(87) International publication number: WO 2011/092786

(57) **Abstract**

A system 100 accepts a registration request which includes content marker information including content identification information and individually sharing user specifying information for specifying a user sharing the content marker information. The system stores the content marker information and the individually sharing user specifying information, included in the registration request in a storage device in association with each other. The system accepts entirely sharing user specifying information which is a basic value of information for specifying a user sharing the stored content marker information. Based on the user identification information included in an accepted output request, the entirely sharing user specifying information, and the individually sharing user specifying information, the system extracts content marker information corresponding to the user identification information, and outputs the extracted content marker information.

## Description

### TETHNICAL FIELD

The present invention relates to a content delivery system for transmitting content data representing content to user equipment.

### BACKGROUND ART

A content delivery system for transmitting content data representing content to user equipment has been known. As one of content delivery systems of this type, a system, described in Non-Patent document 1, accepts content marker information transmitted from user equipment. The content marker information includes content identification information for identifying content.

The content delivery system stores the accepted content marker information. Then, in response to a content marker output request transmitted by user equipment, the content delivery system transmits pieces of content marker information stored therein, to the user equipment.

Meanwhile, when the user equipment receives the pieces of content marker information, the user equipment allows the user to select one of the pieces of received content marker information. Then, the user equipment transmits a content transmission request including the content identification information included in the content marker information selected by the user, to the content delivery system.

When the content delivery system receives the content transmission request transmitted by the user equipment, the content delivery system transmits content data identified by the content transmission request, to the user equipment. Thereby, the user of the user equipment is able to view content that the user desires to view, without performing complicated operation to specify such content.

Further, this content delivery system stores friend list data including user identification information for identifying the users sharing content marker information. When receiving a content marker output request from user equipment, the content delivery system determines whether or not to transmit content marker information that the system accepted from other user equipment, based on the stored friend list data. Thereby, content marker information registered by one user can be viewed by another user appeared in the friend list set by the one user.

Patent Document 1: JP 2008-158663 A

However, in the content delivery system described above, it is impossible to set users sharing content marker information for each of the pieces of content marker information. As such, there is a problem that pieces of content marker information, registered by a user, cannot be shared by different users, respectively.

### SUMMARY

In view of the above, an object of the present invention is to provide a content delivery system capable of solving the above-described problem that "pieces of content marker information, registered by a user, cannot be shared by different users, respectively".

In order to achieve the object, a content delivery system, which is an aspect of the present invention, includes;
a content marker information acceptance means for accepting a content marker registration request, the content marker registration request including content marker information including content identification information for identifying contest, and individually sharing user specifying information for specifying a user sharing the content marker information;
a content marker information storing means for performing processing to store, in a storage device, the content marker information and the individually sharing user specifying information which are included in the accepted content marker registration request, in association with each other;
an entirely sharing user specifying information acceptance means for accepting entirely sharing user specifying information which is a basic value of information for specifying a user sharing the stored content marker information;
a content marker output request acceptance means for accepting a content marker output request which includes user identification information for identifying a user and requests to output content marker information; and
a content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

Further, a content delivery system, which is another aspect of the present invention, includes:
an application server system, and
a connection control system, wherein
the connection control system includes a core IMS (Internet Protocol Multimedia Subsystem) that receives equipment specifying information transmitted by user equipment, and establishes a connection between the application server system and the user equipment based on the received equipment specifying information,
the application server system includes:
   media functions for transmitting content data representing content to the user equipment with which the connection is established by the connection control system;
   service control functions for controlling a service provided by the media functions; and
   user profile server functions for storing profile information of a user of the user equipment, and
the application server system further includes:
   a content marker information acceptance means for accepting a content marker registration request by receiving the content marker registration request via the core IMS, the content marker registration request including content marker information which is information transmitted by the user equipment and is information including content identification information for identifying content, and individually sharing user specifying information for specifying a user sharing the content marker information;
   a content marker information storing means for performing processing to store, in the user profile server functions or the service control functions, the content marker information and the individually sharing user specifying information which are stored in the accepted content marker registration request, in association with each other;
   an entirely sharing user specifying information acceptance means for accepting entirely sharing user specifying information by receiving the entirely sharing user specifying information via the core IMS, the entirely sharing user specifying information being information transmitted by the user equipment and being information as a basic value of information for specifying a user sharing the stored content marker information;
   a content marker output request acceptance means for accepting a content marker output request by receiving the content marker output request, the content marker output request being information transmitted by the user equipment and being information which includes user identification information for identifying a user and requests to output content marker information;
   a content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information; and
   a content marker transmission means for transmitting the output content marker information to the user equipment having transmitted the content marker output request.

Further, a content delivery method, which is another aspect of the present, invention, includes:
accepting a content marker registration request, the content marker registration request including content marker information including content identification information for identifying content, and individually sharing user specifying information for specifying a user sharing the content marker information;
performing processing to store, in a storage device, the content marker information and the individually sharing user specifying information which are included in the accepted content marker registration request, in association with each other;
accepting entirely sharing user specifying information which is a basic value of information for specifying a user sharing the stored content marker information;
accepting a content marker output request which includes user identification information for identifying a user and requests to output content marker information; and
extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

Further, an application server system, which is another aspect of the present invention, includes:
a content marker information acceptance means for accepting a content marker registration request, the content marker registration request including content marker information including content identification information for identifying content, and individually sharing user specifying information for specifying a user sharing the content marker information;
a content marker information storing means for performing processing to store, in a storage device, the content marker information and the individually sharing user specifying information which are included in the accepted content marker registration request, in association with each other;
an entirely sharing user specifying information acceptance means for accepting entirely sharing user specifying information which is a basic value of information for specifying a user sharing the stored content marker information;
a content marker output request acceptance means for accepting a content marker output request which includes user identification information for identifying a user and requests to output content marker information; and
a content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

Further, a recording medium, which is another aspect of the present invention, is a computer-readable recording medium storing a program for causing an application server system to realize:
a content marker information acceptance means for accepting a content marker registration request, the content marker registration request including content marker information including content identification information for identifying content, and individually sharing user specifying information for specifying a user sharing the content marker information;
a content marker information storing means for performing processing to store, in a storage device, the content marker information and the individually sharing user specifying information which are included in the accepted content marker registration request, in association with each other;
an entirely sharing user specifying information acceptance means for accepting entirely sharing user specifying information which is a basic value of information for specifying a user sharing the stored content marker information;
a content marker output request acceptance means for accepting a content marker output request which includes user identification information for identifying a user and requests to output content marker information; and
a content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

Further, user equipment, which is another aspect of the present invention, includes:
a content marker information transmission means for transmitting a content marker registration request, the content marker registration request including content marker information including content identification information for identifying content, and individually sharing user specifying information for specifying a user sharing the content marker information;
an entirely sharing user specifying information transmission means for transmitting entirely sharing user specifying information which is a basic value of information for specifying a user sharing the content marker information;
a content marker output request transmission means for transmitting a content marker output request which includes user identification information for identifying a user and requests to output content marker information; and
a content marker list output means for receiving the content marker information and outputting the received content marker information.

Further, a recording medium, which is another aspect of the present invention, is a computer-readable recording medium storing a program for causing user equipment to realize:
a content marker information transmission means for transmitting a content marker registration request, the content marker registration request including content marker information including content identification information for identifying content, and individually sharing user specifying information for specifying a user sharing the content marker information;
an entirely sharing user specifying information transmission means for transmitting entirely sharing user specifying information which is a basic value of information for specifying a user sharing the content marker information;
a content marker output request transmission means for transmitting a content marker output request which includes user identification information for identifying a user and requests to output content marker information; and
a content marker list output means for receiving the content marker information and outputting the received content marker information.

With the above-described configurations, the present invention enables pieces of content marker information to be shared by different users, respectively.

### BRIEF DESCRIPTION OF DRAWINGS

Fig. 1 is a diagram showing a schematic configuration of a content delivery system according to a first exemplary embodiment of the present invention.
Fig. 2 is a block diagram showing schematic functions of the content delivery system shown in Fig. 1.
Fig. 3 is a block diagram showing schematic functions of user equipment shown in Fig. 1.
Fig. 4 is a sequence chart showing an operation of the content delivery system shown in Fig. 1 when authenticating user equipment and a user of the user equipment.
Fig. 5 is sequence chart showing an operation of the content delivery system shown in Fig. 1 when registering entirely sharing user specifying information in response to an input by the user of the user equipment.
Fig. 6 is a sequence chart showing an operation of the user equipment shown in Fig, 1 when acquiring a content list in response to an input by the user.
Fig. 7 is a sequence chart showing an operation of the content delivery system shown in Fig. 1 when registering content marker information in response to an input by the user of the user equipment.
Fig. 8 is a sequence chart showing an operation of the user equipment shown in Fig. 1 when acquiring a list of content marker information in response to an input by the user.
Fig. 9 is a sequence chart showing an operation of the content delivery system shown in Fig. 1 when updating individually sharing user specifying information in response to an input by the user of the user equipment.
Fig. 10 is a sequence chart showing an operation of the content delivery system shown in Fig.1 when transmitting content data to user equipment in response to an input by the user of the user equipment.
Fig. 11 is a sequence chart showing an operation of user equipment according to an exemplary variation of the first exemplary embodiment, when acquiring a list of content marker information in response to an input by the user.
Fig. 12 is a block diagram showing schematic functions of a content delivery system according to a third exemplary embodiment of the present invention.
Fig. 13 is a block diagram showing schematic functions of a content delivery system according to a fourth exemplary embodiment of the present invention.
Fig. 14 is a block diagram showing schematic functions of a content delivery system according to a fifth exemplary embodiment of the present invention.
Fig. 15 is a block diagram showing schematic functions of a content delivery system according to a sixth exemplary embodiment of the present invention.

### EXEMPLARY EMBODIMENTS

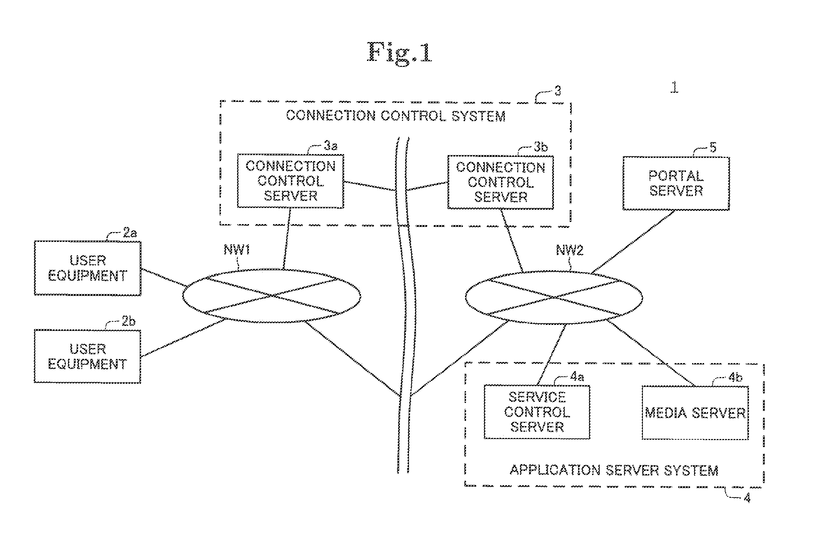

Hereinafter, respective exemplary embodiments of a content delivery system, a content distribution method, an application server system, user equipment (user terminal), and a recording medium, according to the present invention, will be described with reference to Figs. 1 to 15.

### FIRST EXEMPLARY EMBODIMENT

### (Configuration)

As shown in Fig. 1, a content delivery system 1 according to a first exemplary embodiment is a VoD (Video on Demand) system. It should be noted that the content delivery system 1 may be an IPTV (Internet Protocol Television) system (for example, BC (BroadCast) system for broadcasting content) other than the VoD system, or an nPVR (network Personal Video Recorder) system for performing unicast delivery of prerecorded broadcast content.

The content delivery system 1 includes a connection control system 3, an application server system 4, and a portal server 5. The connection control system 3 includes a plurality of servers including a connection control server 3a and a connection control server 3b. The application server system 4 includes a plurality of servers including a service control server 4a and a media server 4b.

The connection control server 3a is communicably connected with user equipment (UE) 2a and 2b over a user side communication network NW1 constituting an IP (Internet Protocol) network. The connection control server 3b, the application server system 4, and the portal server 5 are communicably connected with one another over a service provider side communication network NW2 constituting the IP network.

The user equipment 2a includes a set top box and a remote controller, not shown. The set top box is connected with a TV receiver, not shown. The set top box receives content data representing content (in this example, videos consisting of sounds and pictures) transmitted from the media server 4b, converts the received content data to thereby output the content to the television receiver.

The remote controller has a plurality of buttons (button switches). When a button is pushed by a user, the remote controller transmits a radio signal (for example, infrared signal) according to the button to the set top box. Upon reception of the radio signal from the remote controller, the set top box accepts information input by the user.

Further, the user equipment 2a stores equipment specifying information, which is information for specifying the equipment (self equipment), in a memory working as a storage device.
It should be noted that the user equipment 2b has the same configuration and functions as those of the user equipment 2a.

Each of the connection control server 3a, the connection control server 3b, the service control server 4a, the media server 4b, and the portal server 5 (servers 3a to 5) includes a CPU (Central Processing Unit) and storage devices (memory and HDD (Hard Disk Derive)), not shown. Each of the servers 3a to 5 is adapted to realize functions described below by the CPU which executes programs stored in the storage device.

Each of the connection control server 3a and the connection control server 3b is adapted to control connections among a plurality of devices by receiving and transmitting a SIP message (message according to SIP (Session Initiation Protocol)). As such, each of the connection control server 3a and the connection control server 3b is also called a SIP server.

The connection control system 3 is adapted such that when receiving a SIP message including equipment specifying information transmitted by the user equipment 2a (or user equipment 2b), the connection control system 3 establishes a connection (session) between the application server system 4 and the user equipment 2a (or user equipment 2b) based on the equipment specifying information included in the received SIP message.

The service control server 4a controls a service (content data transmitting service) provided by the media server 4b. The media server 4b transmits content data representing content to the user equipment 2a (or user equipment 2b) with which a connection is established by the connection control system 3.

The portal server 5 is adapted to transmit and receive data with the user equipment 2a (or user equipment 2b) by transmitting and receiving a message (HTTP message) according to HTTP (Hypertext Transfer Protocol). As such, the portal server 5 is a web server,

### (Functions)

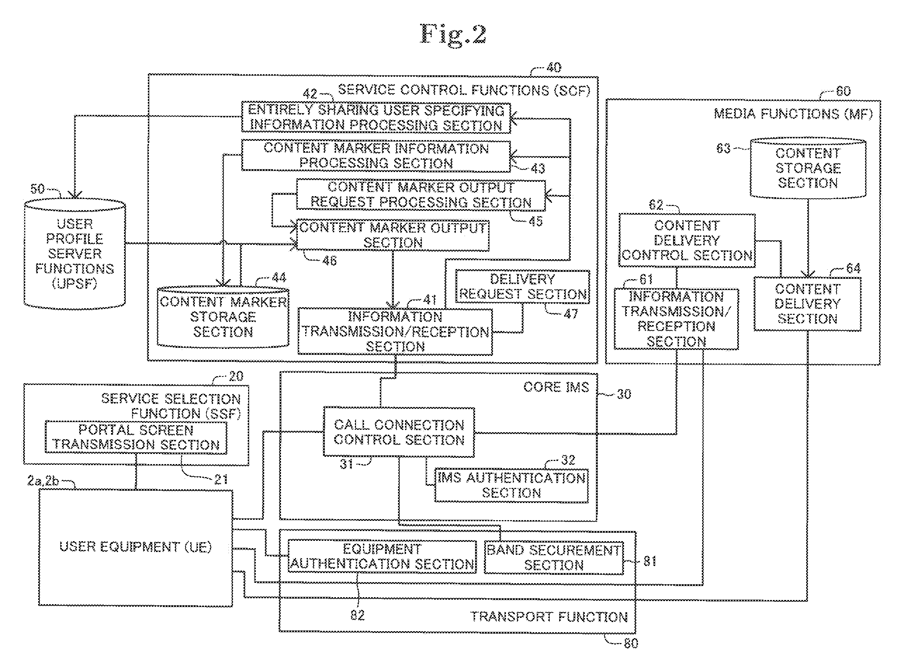

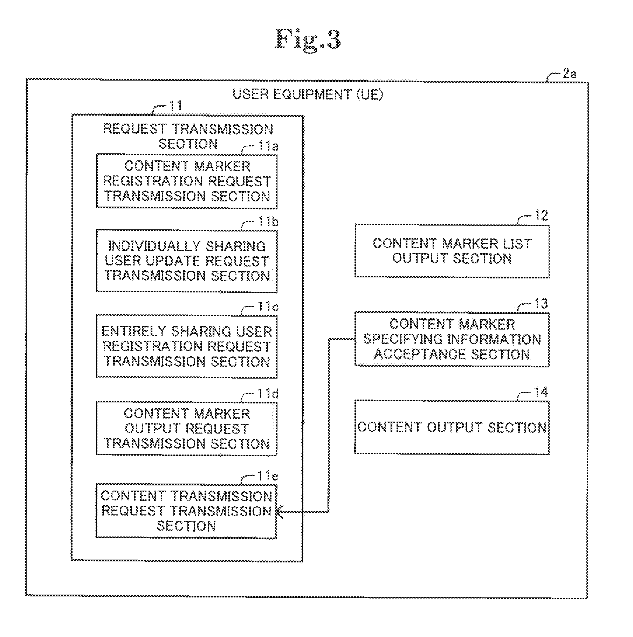

Fig. 2 is a block diagram showing the functions of the content delivery system 1 configured as described above. Further, Fig. 3 is a block diagram showing the functions of the user equipment 2a configured as described above.

### (Function: User equipment)

As shown in Fig. 3, the functions of the user equipment 2a includes a request transmission section 11, a content marker list output section (content marker list output means) 12, a content marker specifying information acceptance section (content marker specifying information acceptance means) 13, and a content output section (content output means) 14.

When the power switch of the user equipment 2a is turned on (power is supplied), the request transmission section 11 transmits a SIP message as an equipment authentication processing request including the stored equipment specifying information, to the connection control server 3a.

The request transmission section 11 also receives a SIP message including equipment authentication success information, from the connection control system 3. The equipment authentication success information is information including equipment address information showing the position on the IP network and indicating that it is authenticated that the user equipment 2a located at the position shown by the equipment address information is valid equipment.

Further, the request transmission section 11 transmits a SIP message, including user authentication information input by the user of the user equipment 2a, to the connection control system 3 as a user authentication processing request. In this example, the user authentication information includes user identification information representing a character string for identifying the user of the user equipment 2a, and password information representing a character string as a password. If a user uses a plurality of pieces of user equipment, the user may use one user identification information, or use different user identification information for each of the pieces of user equipment.

Further, the request transmission section 11 receives a SIP message including user authentication success information from the connection control system 3. The user authentication success information is information including user identification information and indicating that it is authenticated that the user identified by the user identification information (that is, the user who input the user authentication information) is a valid user.

When receiving user authentication success information from the connection control system 3, the request transmission section 11 transmits, to the connection control system 3, a SIP message including a processing request for requesting the application server system to perform processing, in response to a request transmission instruction input by the user of the user equipment 2a. The processing request includes user authentication success information (that is, user identification information).

To be more specific, the request transmission section 11 includes a content marker registration request transmission section (content marker information transmission means) 11a, an individually sharing user update request transmission section (content marker information transmission means) 11b, an entirely sharing user registration request transmission section (entirely sharing user specifying information transmission means) 11c, a content marker output request transmission section (content marker output request transmission means) 11d, and a content transmission request transmission section (content transmission request transmission means) 11e.

The content marker registration request transmission section 11a transmits a content marker registration request, described below, as a processing request. The individually sharing user update request transmission section 11b transmits an individually sharing user update request, described below, as a processing request. The entirely sharing user registration request transmission section 11c transmits an entirely sharing user registration request, described below, as a processing request. The content marker output request transmission section 11d transmits a content marker output request, described below, as a processing request. The content transmission request transmission section 11e transmits a content transmission request, described below, as a processing request.

The content marker list output section 12 receives content marker information. In this example, the content marker information includes content identification information for identifying content, a reproduction start position representing a position where reproduction of the content begins, and a reproduction end position representing a position where the reproduction ends. The content marker list output section 12 outputs a list of the pieces of received content marker information.

It should be noted that the content marker information may include registered user identification information (Owner User ID) for identifying the user who registered the content marker information, or include comment information (User Comment) representing the comments on the content. Further the content marker information may not include the reproduction start position and/or reproduction end position.

The content marker specifying information acceptance section 13 accepts content marker specifying information for specifying the content marker information selected by the user of the user equipment 2a, from the list of the pieces of content marker information output by the content marker list output section 12.

The content transmission request transmission section 11e transmits a content transmission request including the content identification information included in the content marker information specified by the content marker specifying information accepted by the content marker specifying information acceptance section 13.

The content output section 14 receives content data, and outputs content represented by the received content data (in this example, causes a TV receiver to output content).

### (Functions: Connection control system)

The functions of the connection control system 3 include a core IMS (Internet Protocol Multimedia Subsystem) 30 and a transport function (TF) 80.

The core IMS 30 includes a call connection control section 31 and an IMS authentication section (user authentication means) 32. Further, the transport function 80 includes a band securement section 81 and an equipment authentication section 82.

The call connection control section 31 controls connections among a plurality of devices by transmitting and receiving SIP messages,

Further, when the connection control server 3a receives an equipment authentication processing request from the user equipment 2a or 2b, the equipment authentication section 82 determines whether or not the equipment specifying information included in the received equipment authentication processing request and equipment authentication reference information correspond to each other (in this example, match) to thereby authenticate whether or not the user equipment 2a or 2b is valid equipment (perform equipment authentication processing).

In this example, the equipment authentication reference information is information which has been stored in a storage device provided to the connection control server 3a. It should be noted that the equipment authentication reference information may be stored in a storage device (user profile server functions 50 described below) provided to the service control server 4a.

If the equipment authentication section 82 authenticates that the user equipment 2a or 2b is valid equipment, the equipment authentication section 82 transmits a SIP message including equipment authentication success information to the user equipment 2a or 2b.

Further, if the user equipment 2a or 2b is authenticated by the equipment authentication section 82 that it is valid equipment, the call connection control section 31 subsequently performs processing (for example, processing to transfer a message to the application server system 4) based on a message (processing request or the like) transmitted from the user equipment 2a or 2b.

On the contrary, if the user equipment 2a or 2b is not authenticated by the equipment authentication section 82 that it is valid equipment, the call connection control section 31 does not perform processing based on a message (processing request or the like) transmitted from the user equipment 2a or 2b subsequently.

Further, when the connection control server 3a receives a user authentication processing request from the user equipment 2a or 2b, the IMS authentication section 32 determines whether or not the user authentication information, included in the received user authentication processing request, and the user authentication reference information correspond to each other. Thereby, the IMS authentication section 32 authenticates whether or not the user who input the user authentication information (the user identified by the user identification information included in the user authentication information) is a value user (that is, whether the user identified by the user identification information and the user of the user equipment 2a or 2b match) (performs user authentication processing).

In this example, the user authentication reference information is information having been stored in a storage device (user profile server functions 50 described below) provided to the service control server 4a. As such, the user profile server functions 50 constitute a user authentication reference information storage means.

Then, if the user who input the user authentication information is authenticated by the IMS authentication section 32 that it is a valid user, the call connection control section 31 transmits a SIP message including user authentication success information to the user equipment 2a or 2b. On the other hand, if the user who input the user authentication information is not authenticated by the IMS authentication section 32 that it is a valid user, the call connection control section 31 does not transmit a SIP message including user authentication success information to the user equipment 2a or 2b.

Further, when receiving a band securement instruction from the service control server 4a, the call connection control section 31 establishes a connection between the media server 4b and the user equipment 2a or 2b. The band securement instruction includes media delivery specifying information for specifying the media server 4b, and communication band information representing the communication band. The call connection control section 31 transmits, to the transport function 80, the received communication band information, and communication channel specifying information which specifies a communication channel between the media server 4b specified by the received media delivery specifying information and the user equipment 2a or 2b.

The band securement section 81 receives the communication band information and the communication channel specifying information from the call connection control section 31, and performs processing to secure the communication band represented by the received communication band information, on the communication channel specified by the communication channel specifying information (band securement processing).

### (Functions: Service control server)

Meanwhile, the functions of the service control server 4a include service control functions (SCF) 40 and user profile server functions (UPSF) 50.

The user profile server functions 50 store profile information of the users of the user equipment 2a and 2b. Specifically, the user profile server functions 50 store an entirely sharing user table in association with user identification information. It should be noted that the entirely sharing user table may be stored in the service control functions 40.

As described below, the entirely sharing user table is a table containing entirely sharing user specifying information which is a basic value if information for specifying the users sharing the content marker information stored in the service control functions 40. The entirely sharing user specifying information includes authorized view user identification information for identifying the users who are authorized to share the content marker information.

The authorized view user identification information may be one piece of user identification information or a plurality of pieces of user identification information. It should be noted that if the authorized view user identification information does not include user identification information (includes only blank information), it is indicated that there is no user sharing the content marker information. Further, if the authorized view user identification information is set to predetermined all of the pieces of the user authorization information, it is indicated that the content marker information is shared by the all users.

Further, the service control functions 40 include an information transmission/reception section (content marker transmission means) 41, an entirely sharing user specifying information processing section (entirely sharing user specifying information acceptance means and entirely sharing user specifying information storing means) 42, a content marker information processing section (content marker information acceptance means and content marker information storing means) 43, a content marker storage section (content marker information storage means) 44, a content marker output request processing section (content marker output request acceptance means) 45, a content marker output section (content marker output means) 46, and a delivery request section 47.

The information transmission/reception section 41 receives various kinds of information (requests, instructions, notices, etc.) transmitted from the user equipment 2a and 2b or the media server 4b, via the core IMS 30 (by way of the core IMS 30). Further, the information transmission/reception section 41 transmits various kinds of information to the user equipment 2a and 2b or the media server 4b, via the core IMS 30. It should be noted that in this example, various kinds of information are included in SIP messages,

It should be noted that only when the service control server 4a receives a processing request including user authentication success information from the user equipment 2a or 2b, the service control server 4a performs processing based on the processing request. As such, it can be said that the application server system 4 performs processing based on a processing request only when the user who input the user authentication information is authenticated as a valid user by the IMS authentication, section 32.

The entirely sharing user specifying information processing section 42 accepts an entirely sharing user specifying information registration request as a processing request received by the information transmission/reception section 41. The entirely sharing user specifying information registration request includes entirely sharing user specifying information and user identification information for identifying the user of the user equipment 2a or 2b (that is, user identification information for identifying the user of the user equipment 2a or 2b who transmitted the entirely sharing user specifying information).

Then, based on the accepted entirely sharing user specifying information registration request, the entirely sharing user specifying information processing section 42 updates the entirely sharing user table stored in the user profile server functions 50.

To be specific, the entirely sharing user specifying information processing section 42 adds the entirely sharing user specifying information included in the entirely sharing user specifying information registration request, to the entirely sharing user table stored in association with the user identification information included in the received entirely sharing user specifying information registration request. As such, the entirely sharing user specifying information processing section 42 performs processing to store, in the user profile server functions 50, the entirely sharing user specifying information and the user identification information for identifying the user of the user equipment 2a or 2b having transmitted the entirely sharing user specifying information, in association with each other.

The content marker storage section 44 stores a content marker table, in association with the user identification information. It should be noted that the content marker table may be stored in the user profile server function 50.

The content marker table is a table containing a plurality of pieces of content marker registration information. The content marker registration information is constituted of a set of content marker information, individually sharing user specifying information for specifying a user sharing the content marker information, and content marker identification information for identifying the content marker information.

In this example, the individually sharing user specifying information includes authorized view user identification information for identifying a user who is authorized to share the content marker information, and forbidden view user identification information for identifying a user who is forbidden to share the content marker information,

The content marker information processing section 43 accepts a content marker registration request as a processing request received by the information transmission/reception section 41. The content marker registration request includes individually sharing user specifying information, content marker information, and user identification information for identifying the user of the user equipment 2a or 2b.

The content marker information processing section 43 updates the content marker table stored in the content marker storage section 44, based on the accepted content marker registration request.
Specifically, when the content marker registration request is received by the information transmission/reception section 41, the content marker information processing section 43 generates content marker identification information for identifying the content marker information.

Then, the content marker information processing section 43 adds content marker registration information consisting of a set of the content marker information and the individually sharing user specifying information which are included in the content marker registration request, and the generated content marker identification information, to the content marker table stored in association with the user identification information included in the received content marker registration request.

This means that the content marker information processing section 43 performs processing to store, in the content marker storage section 44, the content marker information, the individually sharing user specifying information, and the user identification information (that is, the user identification information for identifying the user of the user equipment 2a or 2b who transmitted the content marker registration request), which are included in the content marker registration request, and the content marker identification information, in association with one another.

Further, the content marker output request processing section 45 accepts a content marker output request as a processing request received by the information transmission/reception section 41. The content marker output request is information which includes user identification information content marker information and requests to output content marker information.

Further, the content marker output section 46 specifies the content marker table stored in association with the user identification information included in the content marker output request accepted by the content marker output request processing section 45. The content marker output section 46 extracts the content marker information included in the specified content marker table. As such, the content marker output section 46 extracts the content marker information stored in association with the user identification information included in the accepted content marker output request.

Further, the content marker output section 46 extracts content marker information with which both a first extraction condition (first condition) and a second extraction condition (second condition) are satisfied, from the entire content marker information stored in the content marker storage section 44.

The first extraction condition is that at least one of the authorized view user identification information included in the individually sharing user specifying information and the authorized view user identification information included in the entirely sharing user specifying information includes the user identification information included in the accepted content marker output request.

The second extraction condition is that the forbidden view user identification information included in the individually sharing user specifying information does not include the user identification information included in the accepted content marker output request.

Regarding this function, specific description will be given based on an assumption that all of the following conditions (1) to (4) are satisfied.
(1) The authorized view user identification information, included in the entirely sharing user specifying information stored in association with user identification information UIDA, includes user identification information UIDB and user identification information WIDE.
(2) Both the authorized view user identification information and the forbidden view user identification information, included in the individually sharing user specifying information associated with content marker information CM1 stored in association with the user identification information UIDA, are blank information.
(3) The authorized view user identification information, included in the individually sharing user specifying information associated with content marker information CM2 stored in association with the user identification information UIDA, includes user identification information UIDD, and the forbidden view user identification information included in the individually sharing user specifying information is blank information.
(4) The forbidden view user identification information, included in the individually sharing user specifying information associated with content marker information CM3 stored in association with the user identification information UIDA, includes the user identification information UIDC, and the authorized view user identification information included in the individually sharing user specifying information is blank information.

In this case, when the content marker output request including the user identification information UIDB is accepted, the content marker output section 46 extracts the content marker information CM1, the content marker information CM2, and the content marker information CM3.
Further, when the content marker output request including the user identification information UIDC is accepted, the content marker output section 46 extracts the content marker information CM1 and the content marker information CM2.
Further, when the content marker output request including the user identification information UIDD is accepted, the content marker output section 46 extracts the content marker information CM2.

In this way, the content marker output section 46 extracts content marker information in which both the first extraction condition and the second extraction condition are satisfied, from the entire content marker information stored in the content marker storage section 44.
Then, the content marker output section 46 outputs the extracted content marker information.

As such, it can be said that based on the individually sharing user specifying information stored in association with content marker information, the entirely sharing user specifying information stored in association with the user identification information stored in association with the content marker information, and the user identification information included in the accepted content marker output request, the content marker output section 46 determines whether or not to extract the content marker information as content marker information corresponding to the user identification information.

Then, the information transmission/reception section 41 transmits the content marker information output by the content marker output section 46, to the user equipment 2a or 2b having transmitted the content marker output request.

Further, the content marker information processing section 43 accepts an individually sharing user update request as a processing request received by the information transmission/reception section 41. The individually sharing user update request includes content marker identification information, authorized view user identification information for identifying a user authorized to share the content marker information, and forbidden view user identification information for identifying a user forbidden to share the content marker information.

The content marker information processing section 43 updates the content marker table stored in the content marker storage section 44, based on the accepted individually sharing user update request.
Specifically, when the individually sharing user update request is received by the information transmission/reception section 41, the content marker information processing section 43 specifies the individually sharing, user specifying information stored in association with the content marker identification information included in the individually sharing user update request.

If the user identification information included in the forbidden view user identification information included in the individually sharing user update request is included in the authorized view user identification information included in the specified individually sharing user specifying information, the content marker information processing section 43 deletes the user identification information from the authorized view user identification information.

On the other hand, if the user identification information included in the forbidden view user identification information in the individually sharing user update request is not included in the authorized view user identification information included in the specified individually sharing user specifying information, the content marker information processing section 43 acquires the entirely sharing user specifying information stored in association with the user identification information stored in association with the content marker identification information included in the individually sharing user update request.

Then, if the authorized view user identification information included in the acquired entirely sharing user specifying information includes the user identification information included in the forbidden view user identification information included in the individually sharing user update request, the content marker information processing section 43 adds the user identification information to the forbidden view user identification information included in the individually sharing user specifying information.

If the user identification information included in the authorized view user identification information included in the individually sharing user update request is included in the forbidden view user identification information included in the specified individually sharing user specifying information, the content marker information processing section 43 deletes the user identification information from the forbidden view user identification information. On the other hand, if the user identification information included in the authorized view user identification information, included in the individually sharing user update request is not included in the forbidden view user identification Information included in the specified individually sharing user specifying information, the content marker information processing section 43 adds the user identification information to the authorized view user identification information included in the individually sharing user specifying information.

Regarding this function, specific description will be given on an assumption that the authorized view user identification information included in the individually sharing user specifying information stored in association with content marker identification information CMID1 includes the user identification information UIDA, and the forbidden view user identification information included in the individually sharing user specifying information includes the user identification information UIDB.

In this case, it is assumed that an individually sharing user update request, including the content marker identification information CMID1, authorized view user identification information which is blank information, and forbidden view user identification information including the user identification information UIDA, is received. At this moment, the content marker information processing section 43 deletes the user identification information UIDA from the authorized view user identification information included in the individually sharing user specifying information stored in association with the content marker identification information CMID1. Thereby, the authorized view user identification information included in the individually sharing user specifying information stored in association with the content marker identification information CMID1 is blank information.

Further, it is assumed that an individually sharing user update request, including the content marker identification information CMID1, authorized view user identification information which is blank information, and forbidden view user identification information including the user identification information UICD, is received. At this moment, the content marker information processing section 43 adds the user identification information UIDC to the forbidden view user identification information included in the individually sharing user specifying information stored in association with the content marker identification information CMID1. Thereby, the forbidden view user identification information included in the individually sharing user specifying information stored in association with the content marker identification information CMID1 is the user identification information UDB and the user identification information UIDC.

Further, it is assumed that an individually sharing user update request, including the content marker identification information CMID1, authorized view user identification information including the user identification information UIDB, and forbidden view user identification information which is blank information, is received. At this moment, the content marker information processing section 43 deletes the user identification information UIDB from the forbidden view user identification information included in the individually sharing user specifying information stored in association with the content marker identification information CMJD1. Thereby, the forbidden view user identification information, included in the individually sharing user specifying information stored in association with the content marker identification information CMID1, is blank information.

Further, it is assumed that an individually sharing user update request, including the content marker identification, information CMID1, authorized view user identification information including the user identification information UIDD, and forbidden view user identification information which is blank information, is received. At this moment, the content marker information processing section 43 adds the user identification information UIDD to the authorized view user identification information included in the individually sharing user specifying information stored in association with the content marker identification information CMID1. Thereby, the authorized view user identification information included in the individually sharing user specifying information stored in association with the content marker identification information CMID1 is the user identification information UIDA and the user identification information UIDD.

In this way, the content marker information processing section 43 updates the content marker table stored in the content marker storage section 44, based on the accepted individually sharing user update request.

The delivery request section 47 accepts a content transmission request as a processing request received by the information transmission/reception section 41. The content transmission request is information which is transmitted by the user equipment 2a or 2b and includes equipment address information and content marker information. The delivery request section 47 outputs a content transmission instruction including the content identification information and the equipment address information included in the content transmission request. The information transmission/reception section 41 transmits the content transmission instruction output by the delivery request section 47, to the media server 4b via the core IMS 30.

### (Functions: Media server)

The functions of the media server 4b include media functions (MF) 60. The media functions 60 include media control functions (MCF) and media delivery functions (MDF).

The media functions 60 include an information transmission/reception section 61, a content delivery control section 62, a content storage section 63, and a content delivery section 64.

The information transmission/reception section 61 receives various kinds of information transmitted from the service control server 4a via the core IMS 30. Further, the information transmission/reception section 61 transmits various kinds of information to the service control server 4a via the core IMS 30.

Further, the information transmission/reception section 61 receives a content view request from the user equipment 2a and 2b. The content view request includes content identification information, a reproduction start position, and a reproduction end position. Further, the information transmission/reception section 61 receives a reproduction start request from the user equipment 2a or 2b in accordance with a predetermined communication protocol (in this example, RTSP (Real Time Streaming Protocol)). The reproduction start request is information representing a request to start transmission of content data.

When a content transmission instruction is received by the information transmission/reception section 61, the content delivery control section 62 determines a media server for transmitting content data, based on the content identification information and the equipment address information included in the content transmission instruction. The content delivery control section 62 transmits media delivery specifying information for specifying the determined media server, and the content identification information, to the service control server 4a via the core IMS 30.

The service control server 4a determines a communication band necessary for transmitting content data identified by the content identification information, based on the received media delivery specifying information and the content identification information. The service control server 4a transmits, to the core IMS 30, a band securement instruction inducing communication band information representing the determined communication band, and the received media delivery specifying information. Further, the service control server 4a transmits the received media delivery specifying information and the content identification information to the user equipment 2a or 2b via the core IMS 30.

The content storage section 63 has stored content data representing content, in association with content identification information.

When a reproduction start request is received by the information transmission/reception section 61, the content delivery section 64 specifies content data identified by the content identification information included in the content view request received by the information transmission/reception section 61, among the pieces of content data stored in the content storage section 63.

Then, the content delivery section 64 transmits, to the user equipment 2a or 2b, a part from the reproduction start position to the reproduction end position included in the content view request, of the specified content data. At this moment, the content delivery section 64 transmits the data in accordance with a predetermined communication protocol (in this example, RTP (Real-time Transport Protocol)), with use of a session established by the core IMS 30.

### (Functions: Portal server)

Meanwhile, the functions of the portal server 5 include a service selection function (SSF) 20. The service selection function 20 includes a portal screen transmission section 21.
The portal screen transmission section 21 receives a portal screen request transmitted by the user equipment 2a or 2b. The portal screen transmission section 21 transmits portal screen information to the user equipment 2a or 2b in response to the received portal screen request.

Further, the service selection function 20 includes a content list storage section and a cogent list transmission section, not shown.
The content list storage section stores, in advance, content list information showing a list of content represented by the content data stored by the media functions 60, in the storage device of the portal server 5.

The content list transmission section receives a content list request transmitted by the user equipment 2a or 2b. The content list transmission section transmits the stored content list information to the user equipment 2a or 2b, in response to the received content list request.

### (Operation)

Next, operation of the content delivery system 1 will be described specifically.

### (Operation: Authentication processing)

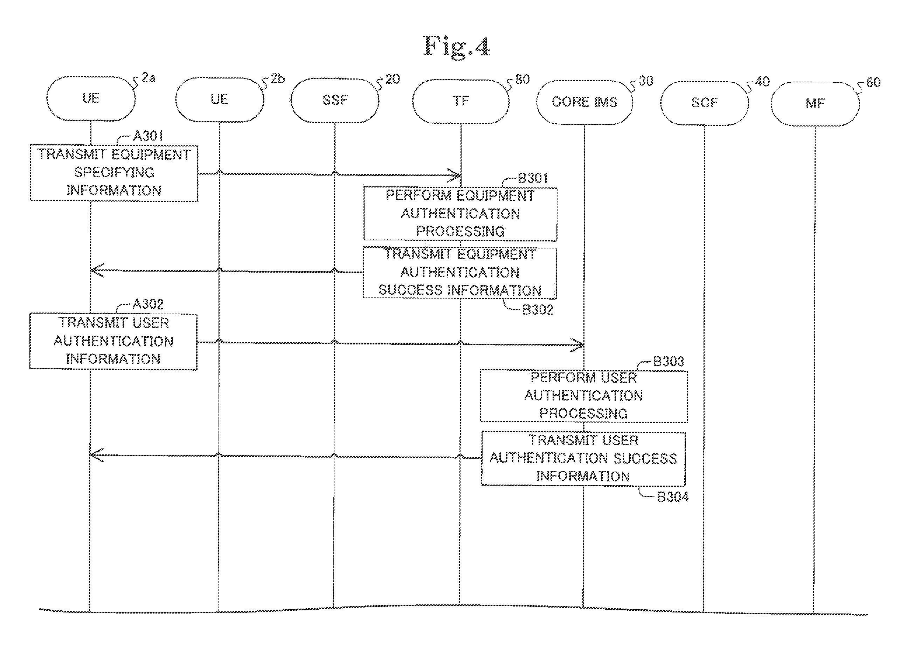

Operation of the content delivery system 1, when authenticating users US of the user equipment 2a and the user equipment 2a, will be described with reference to the sequence chart of Fig. 4.

First, when a user UA turns on the power switch of the user equipment 2a, power is supplied to the user equipment 2a. Thereby, the user equipment 2a transmits an equipment authentication processing request including the stored equipment specifying information, to the connection control server 3a (transport function 80) (step A301).

The transport function 80 determines whether or not the equipment specifying information included in the received equipment authentication processing request and previously stored equipment authentication reference information correspond to each other (in this Example, match), to thereby authenticate whether or not the user equipment 2a is a valid equipment (performs equipment authentication processing) (step B301). Then, if die user equipment 2a is authenticated as valid equipment, the transport function 80 transmits equipment authentication success information to the user equipment 2a (step B302). The equipment authentication success information is information including equipment address information and indicating that the user equipment 2a is authenticated as valid equipment.

When the user equipment 2a receives the equipment authentication success information, the user equipment 2a allows a TV receiver, not shown, to display an image prompting the user UA to input user authentication information. Thereby, the user UA operates a remote controller to input user authentication information.

Then, when the user equipment 2a accepts an input of the user authentication information, the user equipment 2a transmits a user authentication processing request including the accepted user authentication information to the core IMS 30 (step A302).

Thereby, the core IMS 30 receives the user authentication processing request (user authentication information reception step), The core IMS 30 determines whether or not the user authentication information included in the received user authentication processing request and previously stored user authentication reference information correspond to each other (in this example, match). Thereby, the core IMS 30 authenticates whether or not the user identified by the user identification information included in the user authentication reference information (the user who input the user authentication information) is a valid user (perform user authentication processing) (step B303, user authentication step). Then, if the user who input the user authentication information is authenticated as a valid user, the core IMS 30 transmits user authentication success information to the user equipment 2a (step B304).

Thereby, the user equipment 2a receives the user authentication success information. Subsequently, the user equipment 2a transmits (a SIP message including) a processing request including the user authentication success information, to the core IMS 30.

### (Operation: Entirely sharing user registration processing)

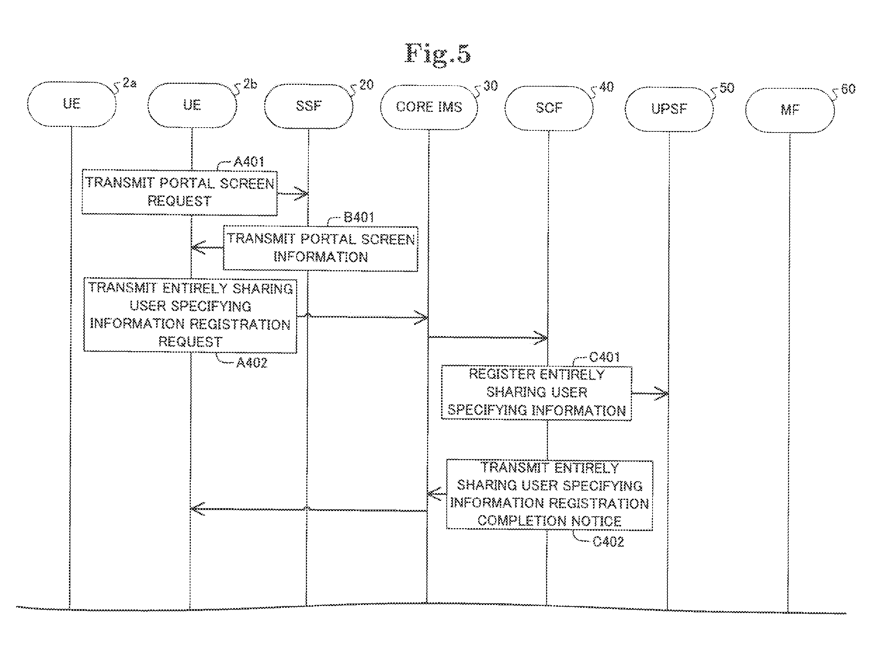

Next, operation of the content delivery system 1, when registering entirely sharing user specifying information in response to an input by a user UB of the user equipment 2b, will be described with reference to the sequence chart of Fig. 5.

First, similar to the case of the user equipment 2a (see Fig. 4), the user equipment 2b transmits an equipment authentication processing request to the transport function 80 and transmits a user authentication processing request to the core IMS 30, to thereby receive user authentication success information from the core IMS 30.

Then, the user equipment 2b transmits a portal screen request to the service selection functions 20 (step A401). Thereby, the service selection functions 20 transmit portal, screen information representing a portal screen to the user equipment 2b in response to the received the portal screen request (step B401). Then, the user equipment 2b allows a TV receiver, not shown, to display an image represented by the received portal screen information. This image includes an input column for inputting entirely sharing user specifying information, and a button for instructing a request to register the entirely sharing user specifying information.

Then, the user UB of the user equipment 2b inputs entirely sharing user specifying information using the remote controller. Further, the user UB performs an operation to push the button for instructing a request to register the entirely sharing user specifying information.

Thereby, the user equipment 2b transmits, to the service control functions 40, an entirely sharing user specifying information registration request including the user authentication success information as user identification information for identifying the user UB, and the input entirely sharing user specifying information, via the core IMS 30 (by way of the core IMS 30) (step A402).

Thereby, the service control functions 40 receive the entirely sharing user specifying information registration request (entirely sharing user specifying information acceptance step), Then, the service control functions 40 specify an entirely sharing user table stored in association with the user identification information included in the received entirely sharing user specifying information registration request, among the entirely sharing user tables stored in the user profile server functions 50.

Then, the service control functions 40 add (register), to (in) the specified entirely sharing user table, the entirely sharing user specifying information included in the received entirely sharing user specifying information registration request (step C401, entirely sharing user specifying information storing process).

Then, the service control functions 40 transmit an entirely sharing user specifying information registration completion notice to the user equipment 2b via the core IMS 30 (step C402). The entirely sharing user specifying information registration completion notice is a notice indicating that registration of the entirely sharing user specifying information has been completed. Then, when the user equipment 2b receives the entirely sharing user specifying information registration completion notice, the user equipment 2b allows a TV receiver, not shown, to display an image showing that registration of the entirely sharing user specifying information has been completed.

### (Operation: Content list acquisition processing)

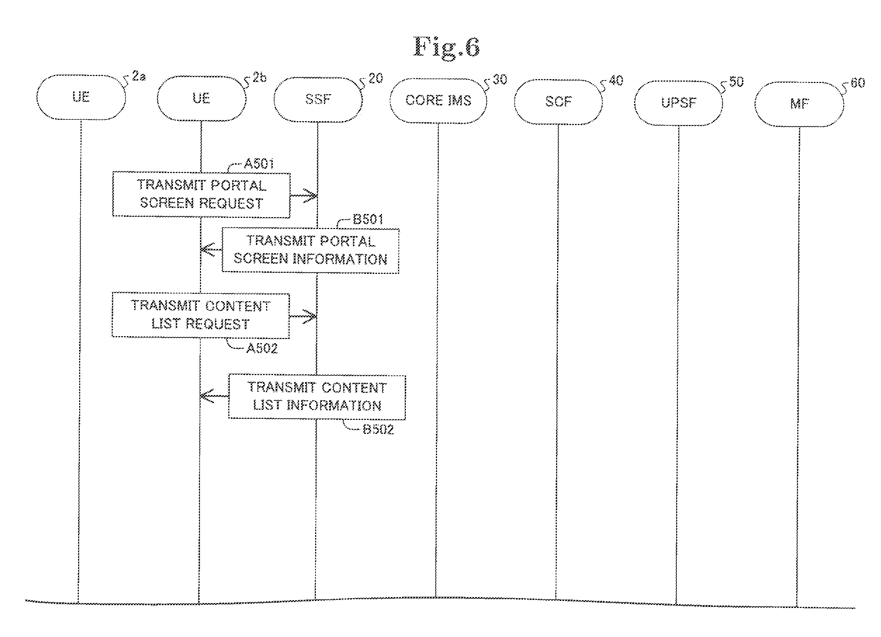

Next, an operation of the content delivery system 1, when acquiring a content list in response to an input from the user UB of the user equipment 2b, will be described with reference to the sequence chart of Fig. 6.

First, the user equipment 2b transmits a portal screen request to the service selection functions 20 (step A501). Thereby, the service selection functions 20 transmit a portal screen image showing a portal screen to the user equipment. 2b in response to the received portal screen request (step B501). Then, the user equipment 2b allows a TV receiver, not shown, to display an image represented by the received portal screen image. This image includes a menu for instructing a request for a content list.

Then, the user UB of the user equipment 2b inputs information of selecting a menu for instructing a request for a content list. Thereby, the user equipment 2b transmits a content list request as a processing request including the user authentication success information, to the service selection functions 20 (step A502).

Thereby, the service selection functions 20 receive the content list request. Then, the service selection functions 20 transmit the stored content list information to the user equipment 2b (step B502). Upon reception of the content list information, the user equipment 2b allows a TV receiver, not shown, to display a list of content represented by the content list information.

It should be noted that the service selection functions 20 are preferably adapted to acquire content list information showing a list of content represented by the content data stored in the media server 4b (media functions 60) and replace the stored content list information with the acquired content list information, each time a preset period has elapsed.

Further, the user equipment 2b may be adapted to transmit a content list request to the service control functions 40, rather than the service selection functions 20. In that case, the service control functions 40 are adapted such that when receiving a content list request, the service control functions 40 acquire content list information showing a list of content represented by content data stored in the media server 4b (media functions 60), and transmit the acquired content list information to the user equipment 2b via the core IMS 30.

### (Operation: Content marker registration processing)

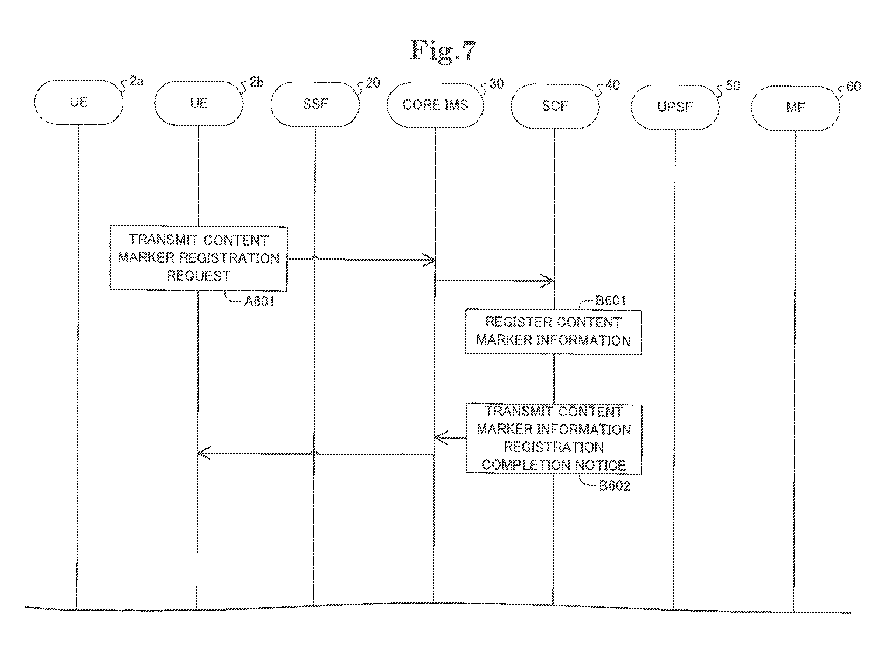

Next, an operation of the content delivery system 1, when the content delivery system 1 registers content marker information in response to an input by the user UB of the user equipment 2b, will be described with reference to the sequence chart of Fig. 7.

In a state where a content list is displayed on a TV receiver, the user UB of the user equipment 2b selects content, and inputs content specifying information which specifies the selected content. The content specifying information includes content identification information. Further, the user UB inputs information representing the reproduction start position and the reproduction end position of the selected content. In additions, the user UB inputs individually sharing user specifying information.

Thereby, the user equipment 2b transmits, to the service control functions 40, a content marker registration request including content marker information which includes the content identification information, the reproduction start position, and the reproduction end position, the input individually sharing user specifying information, and the user authentication success information as user identification information for identifying the user UB, via the core IMS 30 (step A601).

Thereby, the service control functions 40 receive the content marker registration request (content marker information acceptance step). Then, the service control functions 40 generate content marker identification information. Further, the service control functions 40 specify the content marker table stored in association with the user identification information included in the received content, marker registration request, among the content marker tables stored in the content marker storage section 44.

Then, the service control functions 40 add, to the specified content marker table, content marker registration information consisting of a set of the content, marker information and the individually sharing user specifying information which are included in the received content marker registration request and the generated content marker identification information (step B601, content marker information storing step).

Then, the service control functions 40 transmit a content marker information registration completion notice to the user equipment 2b via the core IMS 30 (step B602). The content marker information registration completion notice is a notice indicating that registration of the content marker information has been completed. When the user equipment 2b receives the content marker information registration completion notice, the user equipment 2b allows a TV receiver, not shown, to display an image showing that registration of the content marker information has been completed.

It should be noted that in this example, description has been given on the operation of the content delivery system 1 when, with a selection of one of the pieces of content by the user UB from a content list, registering content marker information including content identification information for identifying the selected content in the content delivery system 1.

Meanwhile, an operation of the content, delivery system 1 when, with a selection of one of the pieces of content marker information by the user UB from a list of the content marker information, registering the selected content marker information in the content delivery system 1, can be described similarly. Further, an operation of the content delivery system, when the user UB registers content marker information including content identification information for identifying the content that the user is currently viewing, in the content delivery system 1, can be described similarly.

### (Operation: Content marker information acquisition processing)

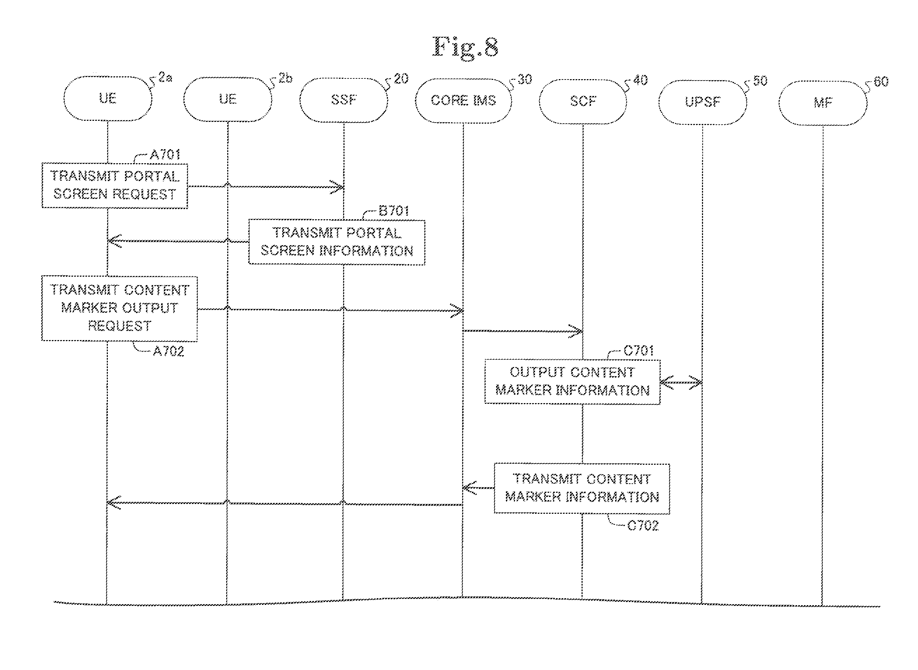

Next, an operation of the content delivery system 1, when acquiring content marker information in response to an input by the user UA of the user equipment 2a, will be described with reference to the sequence chart of Fig. 8.

First, the user equipment 2a transmits a portal screen request to the service selection functions 20 (step A701). Thereby, the service selection functions 20 transmit portal screen information representing a portal screen to the user equipment 2a in response to the received portal screen request (step B701). Then, the user equipment 2a allows a TV receiver, not shown, to display an image represented by the received portal screen information. This image includes a menu for instructing a request to output content marker information.

Then, the user UA of the user equipment 2a inputs information of selecting a menu for instructing a request to output content marker information. Thereby, the user equipment 2a transmits a content marker output request including user authentication success information as user identification information for identifying the user UA and requesting outputting of the content marker information, to the service control functions 40 via the core IMS 30 (step A702).

Thereby, the service control functions 40 receive the content marker output request (content marker output request acceptance step). Then, based on the entirely sharing user table stored in the user profile server function 50, the content marker table stored in the content marker storage section 44, and the received content marker output request, the service control functions 40 extract content marker information according to the user identification information, from the pieces of stored content marker information,

To be specific, the service control functions 40 specify the content marker table stored in association with the user identification information included in the content marker output request, and extract the content marker information included in the specified content marker table.

Further, the service control functions 40 extract content marker information in which both the first extraction condition and the second extraction condition are satisfied, from the entire content marker information stored in the content marker storage section 44.
Then, the service control functions 40 output the extracted content marker information (step C701, content marker output step).

Then, the service control functions 40 transmit the output content marker information to the user equipment 2a (which transmitted the content marker output request) via the core IMS 30 (step C702, content marker transmission step).

Then, when the user equipment 2a receives the content marker information, the user equipment 2a allows a TV receiver, not shown, to display a list of the received content marker information (content marker list output step).

### (Operation: Content, marker update processing)

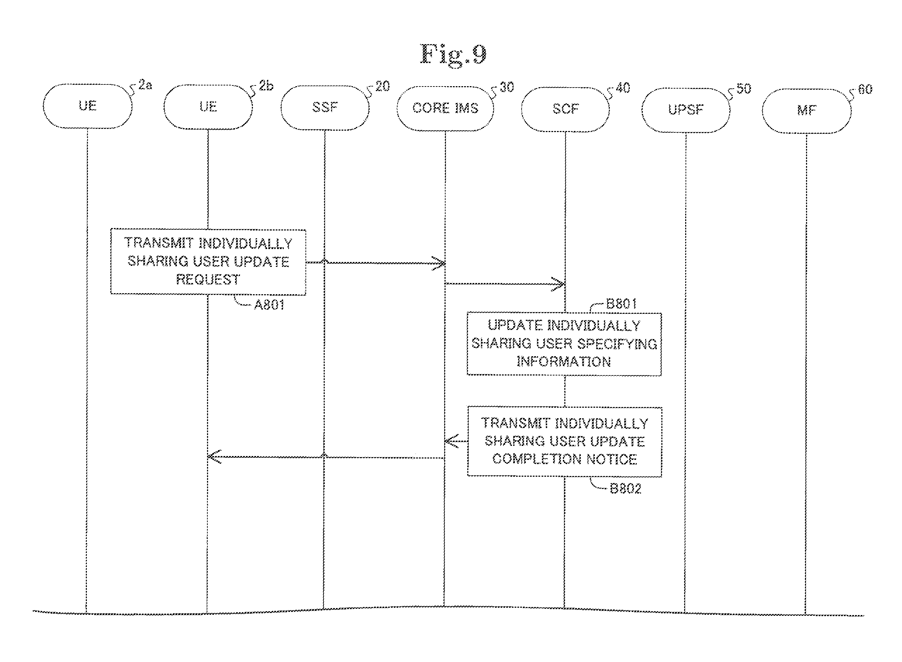

Next, an operation of the content delivery system 1, when updating individually sharing user specifying information in response to an input by the user UB of the user equipment 2b, will be described with reference to the sequence chart of Fig. 9,

In a state where a list of content marker information is displayed on the TV receiver, the user UB of the user equipment 2b selects content marker information, and inputs content marker specifying information for specifying the selected content marker information. Further, the user UB inputs authorized view user identification information and forbidden view user identification information.

Thereby, the user equipment 2b accepts the input content marker specifying information, and transmits an individually sharing user update request as a processing request, including content marker identification information for identifying the content marker information specified by the accepted content marker specifying information, the authorized view user identification information and the forbidden view user identification information which have been input, and user authentication success information as user identification information for identifying the user UB, to the service control functions 40 via the core IMS 30 (step A801).

Thereby, the service control functions 40 receive the individually sharing user update request (content marker information acceptance step). Then, the service control functions 40 specify the individually sharing user specifying information stored in association with the content marker identification information included in the received individually sharing user update request, among the pieces of individually sharing user specifying information stored in the content marker storage section 44. Then, the service control functions 40 update the specified individually sharing user specifying information based on the received individually sharing user update request (step B801, content marker information storing step).

Then, the service control functions 40 transmit an individually sharing user update completion notice to the user equipment 2b via the core IMS 30 (step B802). The individually sharing user update completion notice is a notice indicating that update of the individually sharing user specifying information has been completed. Then, when the user equipment 2b receives the individually sharing user update completion notice, the user equipment 2b allows a TV receiver, not shown, to display an image showing that update of the individually sharing user specifying information has been completed.

### (Operation: Content view processing)

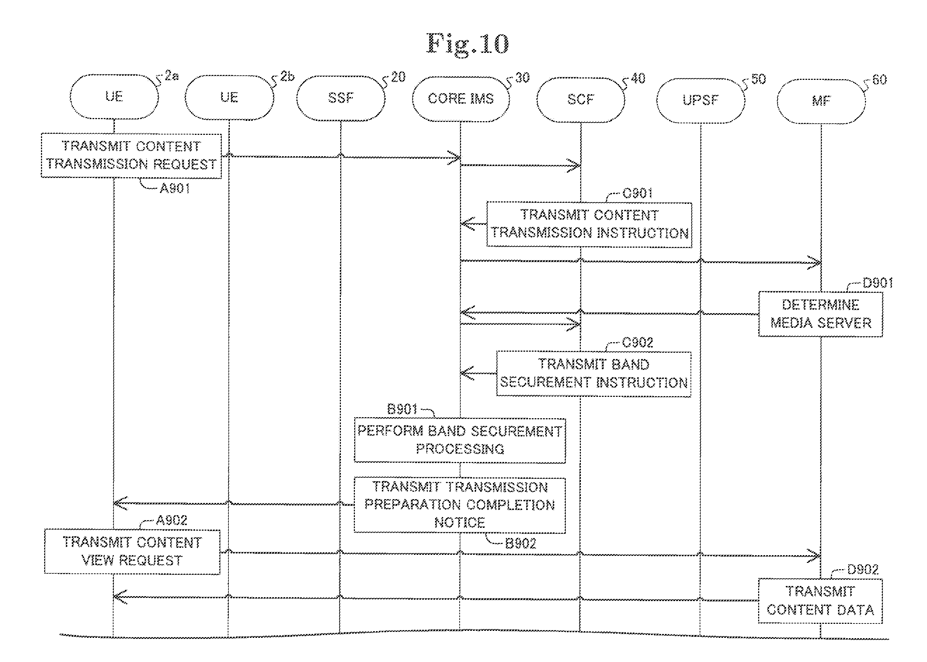

Next, an operation of the content delivery system 1, when transmitting content data to the user equipment 2a in response to an input by the user UA of the user equipment 2a, will be described with reference to the sequence chart of Fig. 10.

In a state where a list of content marker information is displayed on the TV receiver, the user UA of the user equipment 2a selects content marker information, and inputs content marker specifying information for identifying the selected content marker information.

Thereby, the user equipment 2a accepts the input content marker specifying information, and transmits a content transmission request as a processing request, including the content identification information included in the content marker information specified by the accepted content marker specifying information, user authentication success information as user identification information for identifying the user UA, and equipment address Information, to the service control functions 40 via the core IMS 30 (step A901),

The service control functions 40 receive the content transmission request. Then, the service control functions 40 transmit a content transmission instruction including the content identification information and the equipment address information, included in the received content transmission request, to the media functions 60 via the core IMS 30 (step C901, part of a content transmission step). The content transmission instruction includes the equipment address information, the user identification information, and the content identification information.

Thereby, the media functions 60 receive the content transmission instruction. Then, the media functions 60 determine a media server to which content data is transmitted, based on the content identification information and the equipment address information included in the content transmission instruction. Further, the media functions 60 transmit media delivery specifying information for specifying the determined media server (in this example, the media server 4b) and the content identification information, to the service control functions 40 via the core IMS 30 (step D901).

Thereby, the service control functions 40 receive the media delivery specifying information and the content identification information. Then, the service control functions 40 determine a communication band necessary for transmitting content data identified by the content identification information, based on the received media delivery specifying information and content identification information.

Further, the service control functions 40 transmit a band securement instruction, including communication band information indicating the determined communication band and the received media delivery specifying information and the content identification information, to the core IMS 30 (step C902).

When the core IMS 30 receives the band securement instruction, the core IMS 30 establishes a connection (session) between the media server 4b and the user equipment 2a (connection establishing step). Further, the core IMS 30 transmits the received communication band information, and communication channel specifying information which specifies a communication channel between the media server 4b specified by the received media delivery specifying information and the user equipment 2a, to the transport function 80. Thereby, the transport function 80 performs processing to secure the communication band indicated by the received communication band information (band securement processing), on the communication channel specified by the received communication channel specifying information (step B901).

Then, upon completion of the band securement processing, the core IMS 30 transmits a transmission preparation completion notice to the user equipment 2a (step B902). The transmission, preparation completion notice includes the received media delivery specifying information and the content identification information.

Then, when the user equipment 2a receives the transmission preparation completion notice, the user equipment 2a transmits a content view request and a reproduction start request, to the media server 4b (media functions 60) specified by the media delivery specifying information included in the transmission preparation completion notice (step A902). The content view request includes the content identification information included in the transmission preparation completion notices and the reproduction start position and the reproduction end position included in the content marker information specified by the content marker specifying information.

Then, when the media functions 60 receive the content view request and the reproduction start request, the media functions 60 specify content data identified by the content identification information included in the received content view request, among the pieces of content data stored in the content storage section 63.

Then, the media functions 60 transmit the portion from the reproduction start position to the reproduction start position included in the content view request, of the specified content data, to the user equipment 2a (step D902, part of a content transmission step). At this moment, the media functions 60 transmit the data using the session established by the core IMS 30. Thereby, the user equipment 2a receives the content data, and allows a TV receiver, not shown, to output the content represented by the received content data.

It should be noted that in this example, description has been given on the operation of the content delivery system 1 in the case where the user UA selects one of the pieces of content marker information from the list of the content marker information, whereby the content delivery system 1 transmits content data corresponding to the selected content marker information, to the user equipment 2a. Meanwhile, the operation of the content delivery system 1, in the case where the user UA selects one content from a content list, whereby the content delivery system 1 transmits content data representing the selected content to the user equipment 2a, can be described similarly. Further, the operation of the content delivery system 1, when transmitting content data to the user equipment 2b, can also be described similarly.

As described above, according to the content delivery system 1 of the first exemplary embodiment of the present invention, users who share content marker information can be set for each of the pieces of content marker information. Consequently, pieces of content marker information, registered by a user, can be shared with different users, respectively. Further, by setting entirely sharing user specifying information, the users who are common in the entire content marker information can be set as the users sharing the content marker information. As a result, it is possible to reduce time and effort taken by a user who sets the users sharing the content marker information.

As such, according to the content delivery system 1, it is possible to share respective pieces of content, marker information with different users while reducing time and effort taken by a user who sets the users sharing the content marker information.

Further, the content delivery system 1 receives a content view request which is transmitted from the user equipment 2a or 2b and includes content marker information, and transmits content data representing the content identified by the content marker information included in the received content view request, to such user equipment 2a or 2b.

According to this configuration, the user of the user equipment 2a or 2b is able to view desired content without performing troublesome operation for identifying such content. As a result, the user-friendliness can be improved.

In addition, the content delivery system 1 accepts a content marker output request including user identification information for identifying a user authorized as a valid user. Thereby, it is possible to prevent the content delivery system 1 from performing processing based on a content marker output request transmitted by a user unauthorized a.s a valid user. As a result, it is possible to prevent content marker information from being viewed by invalid users.

It should be noted that in the first exemplary embodiment, the content delivery system 1 is configured such that the user equipment 2a or 2b transmits a content marker output request to the service control functions 40 via the core IMS 30. In other words, the user equipment 2a and 2b is adapted to transmit a SIP message as a content marker output request.

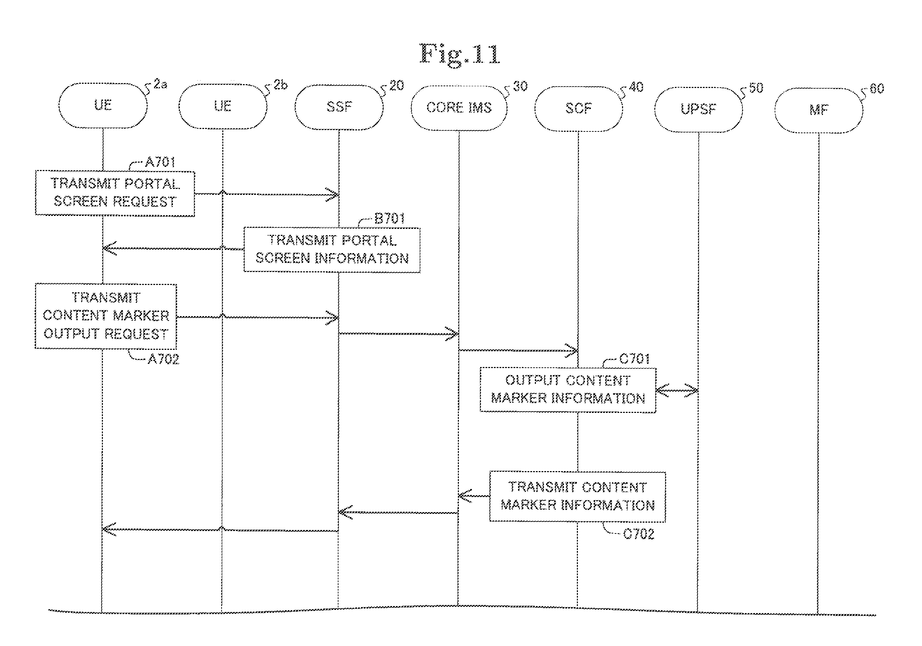

Meanwhile, in an exemplary variation of the first exemplary embodiment, the content delivery system 1 may be configured such that the user equipment 2a or 2b transmits a content marker output request to the service selection functions 20 and the service selection functions 20 transmit the received content marker output request to the service control functions 40 via the core IMS 30, as shown in Fig. 11.

In that case, the content delivery system 1 is configured such that the user equipment 2a or 2b transmits an HTTP message as a content marker output request to the service selection functions 20 and the service selection functions 20 transmit a SIP message as a content marker output request to the service control functions 40 via the core IMS 30.

Further, in this exemplary variation, the content delivery system 1 is configured such that the service control functions 40 transmit a SIP message including content marker information to the service selection functions 20 via the core IMS 30, and the service selection functions 20 transmit an HTTP message including the received content marker information to the user equipment 2a or 2b.

It should be noted that in the first exemplary embodiment, the content delivery system 1 is configured such that the user equipment 2a or 2b transmits a processing request including user authentication success information (that is, user identification information) to the service control functions 40. Meanwhile, in another exemplary variation of the first exemplary embodiment, the content delivery system 1 may be configured such that the user equipment 2a or 2b transmits a processing request not including user authentication success information and the core IMS 30 (for example, authentication proxy) adds user authentication success information to the processing request.

Further, in another exemplary variation of the first exemplary embodiment, the content delivery system 1 may be configured such that the service selection functions 20 or the service control functions 40 perform user authentication processing.

### FIRST EXEMPLARY VARIATION OF FIRST EXEMPLARY EMBODIMENT

Next, a content delivery system according to a first exemplary variation of the first exemplary embodiment of the present invention will be described. The content delivery system according to the first exemplary variation is different from the content delivery system of the first exemplary embodiment in that individually sharing user specifying information includes forbidden view user identification information and does not include authorized view user identification information. As such, description will be given below focusing on such a difference.

In this example, individually sharing user specifying information only includes forbidden view user identification information. Accordingly, at least in this example, individually sharing user specifying information can be restated as forbidden view user identification information.

Further, the content marker output section 46 extracts content marker information in which both a first extraction condition (first condition) and a second extraction condition (second condition) are satisfied, from the entire content marker information stored in the content marker storage section 44,

The first extraction condition is that authorized view user identification information included in entirely sharing user specifying information includes user identification information included in an accepted content marker output request.
The second extraction condition is that forbidden view user identification information included in individually sharing user specifying information does not include user identification information included in an accepted content marker output request.

To be specific, when a content marker output request is accepted, the content marker output section 46 specifies user identification information stored in the user profile server functions 50 in association with entirely sharing user specifying information including the user identification information, included in the accepted content marker output request, as authorized view user identification information.

Then, from the content marker information and the individually sharing user specifying information stored in the content marker storage section 44, the content marker output section 46 acquires content marker information and individually sharing user specifying information stored in association with the specified user identification information, in association with each other.

As such, it can be said that the content marker output section 46 retrieves content marker information and individually sharing user specifying information which are related to the user identification information associated with the entirely sharing user specifying information which includes the user identification information, included in the accepted content marker output request, as authorized view user identification information.

Then, with respect to each of the pieces of acquired individually sharing user specifying information, the content marker output section 46 determines (checks) whether or not the forbidden view user identification information, included in the individually sharing user specifying information, includes the user identification information included in the content marker output request. Then, if the content marker output section 46 determines that the forbidden view user identification information included in the individually sharing user specifying information includes the user identification information included in the content marker output request, the content marker output section 46 deletes the individually sharing user specifying information and the content marker information associated with the individually sharing user specifying information, from the acquired content marker information and the individually sharing user specifying information.

The operations of determination, deletion, and the like by the content marker output section 46 can be restated as follows. The content marker output section 46 checks whether or not the user identification information included in the content marker output request exists in the forbidden view user identification information. Then, if the user identification information included in the content marker output request exists in the forbidden view user identification information, the content marker output section 46 deletes the forbidden view user identification information and the content marker information associated with the forbidden view user identification information from a response data set which is the retrieved content marker information and the individually sharing user specifying information,

After deletion from the acquired content marker information and the individually sharing user specifying information, the content marker output section 46 outputs the remaining content marker information of the acquired content marker information. It should be noted that the remaining content marker information can be said as content marker information extracted according to the user identification information included in the content marker output request. In that case, the individually sharing user specifying information is excluded from a shared object. As a result, the content delivery system can be configured such that the user identification information of a user, who is forbidden to share, is hidden from the users sharing the content marker information.

It should be noted that instead of outputting the remaining content marker information of the acquired content marker information, the content marker output section 46 may output the remaining content marker information and the individually sharing user specifying information, of the acquired content marker information and the individually sharing user specifying information. In that case, the individually sharing user specifying information is also shared. As a result, the content delivery system can be configured such that each of the users sharing the content marker information is able to check a user who is unauthorized to share the content marker information.

Even with the content delivery system 1 configured as described above, actions and effects similar to those of the first exemplary embodiment can be exhibited.

### SECOND EXEMPLARY VARIATION OF FIRST EXEMPLARY EMBODIMENT

Next, a content delivery system according to a second exemplary variation of the first exemplary embodiment of the present invention will be described. The content delivery system of the second exemplary variation is different from the content delivery system of the first exemplary embodiment in that individually sharing user specifying information includes authorized view user identification information and does not includes forbidden view user identification information. As such, description will be given below focusing on such a difference.

In this example, individually sharing user specifying information only includes authorized view user identification information. Accordingly, art least in this example, individually sharing user specifying information can be restated as authorized view user identification information,

Further, the content marker output section 46 extracts content marker information in which an extraction condition is satisfied, from the entire content marker information stored in the content marker storage section 44.

The extraction condition is that at least one of the authorized view user identification information included in the individually sharing user specifying information and the authorized view user identification information included in the entirely sharing user specifying information includes the user identification information included in the accepted content marker output request.

To be specific, when a content marker output request is accepted, the content marker output section 46 specifies the user identification information stored in the user profile server functions 50 in association with the entirely sharing user specifying information including the user identification information, included in the accepted content marker output request, as authorized view user identification information.

Then, from among the pieces of content marker information stored in the content marker storage section 44, the content marker output section 46 acquires the content marker information stored in association with the specified user identification information.

Further, the content marker output section 46 acquires the content marker information stored in the content marker storage section 44 in association with the individually sharing user specifying information, including the user identification information included in the content marker output request, as authorized view user identification information.

Then, the content marker output section 46 combines the content marker information acquired based on the entirely sharing user specifying information, and the content marker information acquired based on the individually sharing user specifying information. Then, the content marker output section 46 deletes the duplicated content marker information from the combined content marker information, and outputs the remaining content marker information. It should be noted that the remaining content marker information can be said as content marker information extracted according to the user identification information included in the content marker output request.

Even with the content delivery system 1 configured as described above, actions and effects similar to those of the first exemplary embodiment can be exhibited.

### SECOND EXEMPLARY EMBODIMENT

Next, a content delivery system according to a second exemplary embodiment of the present invention will be described. The content delivery system of the second exemplary embodiment is different from the content delivery system of the first exemplary embodiment in that a method of extracting content marker information based on entirety sharing user specifying information and individually sharing user specifying information differs from that of the first exemplary embodiment. As such, description will be given below based on such a difference.

In this example, individually sharing user specifying information only includes authorized view user identification information.
Further, if authorized view user identification information included in individually sharing user specifying information is not blank information, the content marker output section 46 determines whether or not to extract content marker information based on the individually sharing user specifying information.

To be specific, in that case, the content marker output section 46 determines whether or not the authorized view user identification information included in the individually sharing user specifying information includes the user identification information included in the accepted content marker output request. When determining that the authorized view user identification information includes the user identification information, the content marker output section 46 extracts the content marker information stored in association with the individually sharing user specifying information as the content marker information corresponding to the user identification information.

On the other hand, if the authorized view user identification information included in the individually sharing user specifying information is blank information, the content marker output section 46 determines whether or not to extract content marker information based on the entirely sharing user specifying information stored in association with the user identification information stored in association with the individually sharing user specifying information.

To be specific, in that case, the content marker output section 46 determines whether or not the authorized view user identification information included in the entirely sharing user specifying information includes the user identification information included in the accepted content marker output request. When determining that the authorized view user identification information includes the user identification information, the content marker output section 46 extracts the content marker information stored in association with the individually sharing user specifying information as content marker information corresponding to the user identification information.

Regarding this function, specific description will be given based on an assumption that all of the following conditions (1) to (4) are satisfied.
(1) The authorized view user identification information, included in the entirely sharing user specifying information stored in association with user identification information UIDA, includes user identification information UIDB and user identification information UIDC.
(2) The authorized view user identification information, included in the individually sharing user specifying information associated with content marker information CM1 stored in association with the user identification information UIDA, is blank information.
(3) The authorized view user identification information, included in the individually sharing user specifying information associated with content marker information CM2 stored in association with the user identification information UIDA, includes the user identification information UIDB.
(4) The authorized view user identification information, included in the individually sharing user specifying information associated with content marker information CM3 stored in association with the user identification information UIDA, includes the user identification information UIDB and user identification information UIDD.

In this case, when a content marker output request including the user identification information UIDB is accepted, the content marker output section 46 extracts the content marker information CM1, the content marker information CM2, and the content marker information CM3.
Further, when a content marker output request including the user identification information UIDC is accepted, the content marker output section 46 extracts the content marker information CM1.
Further, when a content marker output request including the user identification information UIDD is accepted, the content marker output section 46 extracts the content marker information CM3.

In this way, the content marker output section 46 extracts the content marker information corresponding to the user identification information included in the accepted content marker output request, from the entire content marker information stored in the content marker storage section 44.

Further, in this example, an individually sharing user update request includes content marker identification information, and individually sharing user specifying information including authorised view user identification information.
The content marker information processing section 43 updates the content marker table stored in the content marker storage section 44 based on the received individually sharing user update request.

To be specific, when an individually sharing user update request is received by the information transmission/reception section 41, the content marker information processing section 43 specifies the individually sharing user specifying information stored in association with the content marker identification information included in the individually sharing user update request. Then, the content marker information processing section 43 replaces the specified individually sharing user specifying information with the individually sharing user specifying information included in the individually sharing user update request.

Even with the content delivery system 1 configured as described above, actions and effects similar to those of the first exemplary embodiment can be exhibited.

### FIRST EXEMPLARY VARIATION OF SECOND EXEMPLARY EMBODIMENT

Next, a content delivery system according to a first exemplary variation of the second exemplary embodiment of the present invention will be described. The content delivery system according to the first exemplary variation is different from the content delivery system of the second exemplary embodiment in that a method of updating individually sharing user specifying information is different from that of the second exemplary embodiment. As such, description will be given below focusing on such a difference.

In this example, an individually sharing user update request includes content marker identification information, authorized view user identification information, and forbidden view user identification information.
The content marker information processing section 43 updates the content marker table stored in the content marker storage section 44 based on the received individually sharing user update request.

To be specific, when an individually sharing user update request is received by the information transmission/reception section 41, the content marker information processing section 43 specifies the individually sharing user specifying information stored in association with the content marker identification information included in the individually sharing user update request.

The content marker information processing section 43 deletes the user identification information included in the forbidden view user identification information included in the accepted individually sharing user update request, from the authorized view user identification information included in the individually sharing user specifying information specified. Further, the content marker information processing section 43 adds the user identification information included in the authorized view user identification information included in the accepted individually sharing user update request, to the authorized view user identification information included in the specified individually sharing user specifying information.

Even with the content delivery system 1 configured as described above, actions and effects similar to those of the second exemplary embodiment can be exhibited.

### THIRD EXEMPLARY EMBODIMENT

Next, a content delivery system according to a third exemplary embodiment of the present invention will be described. The content delivery system of the third exemplary embodiment is different from the content delivery system of the first exemplary embodiment in that as information for specifying users sharing content marker information, information for identifying a group consisting of a plurality of users is used. As such, description will be given below focusing on such a difference.

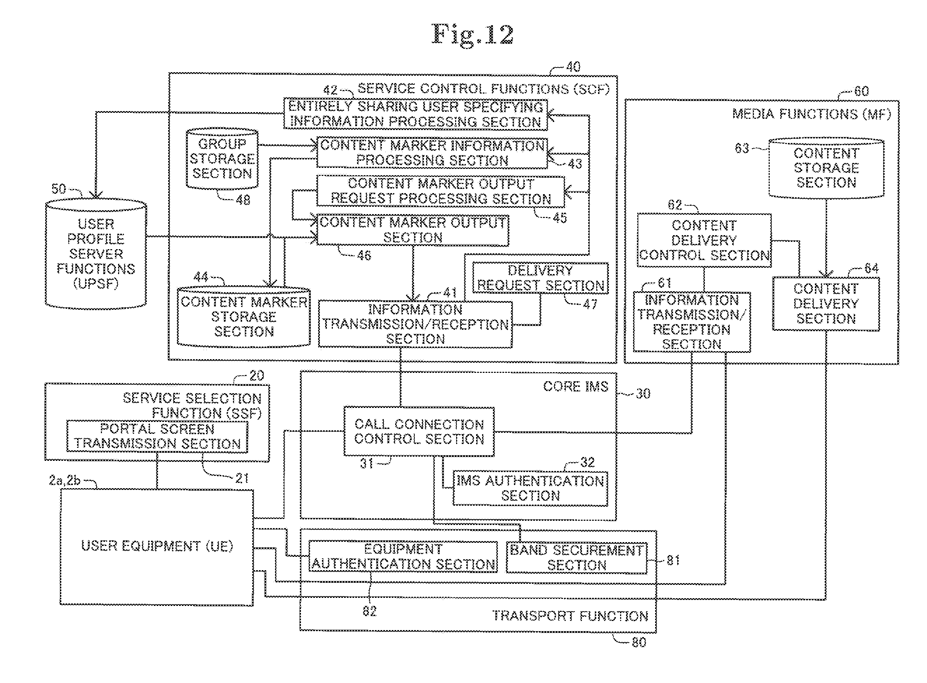

The service control functions 40 according to this content delivery system 1 includes a group storage section (group information storage means) 48 in addition to the functions included in the service control functions 40 of the first exemplary embodiment, as shown in Fig. 12.

The group storage section 48 stores a plurality of pieces of user identification information and group identification information for identifying a group consisting of a plurality of users identified by the pieces of user identification information, in association with each other.

The content marker registration request transmission section 11a transmits a content marker registration request including content marker information, individually sharing group identification information which is information input by a user and is information for identifying a group consisting of a plurality of users sharing the content marker information, and user identification information for identifying the user of the user equipment 2a or 2b. It should be noted that the content marker registration request may include individually sharing user specifying information in addition to the individually sharing group identification information.

The content marker information processing section 43 accepts the content marker registration request received by the information transmission/reception section 41. The content marker information processing section 43 updates the content marker table stored in the content marker storage section 44 based on the accepted content marker registration request.

To be specific, when the content marker registration request is received by the information transmission/reception section 41, the content marker information processing section 43 generates content marker identification information for identifying the content marker information.

Further, the content marker information processing section 43 generates individually sharing user specifying information including the pieces of user identification information stored in the group storage section 48 in association with group identification information which is identical to the individually sharing group identification information included in the accepted content marker registration request.

Then, the content marker information processing section 43 adds content marker registration information consisting of a set of the content marker information included in the content marker registration request, the generated individually sharing user specifying information, and the generated content marker identification information, to the content marker table stored in association with the user identification information included in the received content marker registration request.

Further, the individually sharing user update request transmission section 11b transmits an individually sharing user update request including the content marker identification information, authorized view group identification information, and forbidden view group identification information. The authorized view group identification information is information for identifying a group consisting of a plurality of users who are authorized to share the content marker information. The forbidden view group identification information is information for identifying a group consisting of a plurality of users who are forbidden to share the content marker information.

Further, the content marker information processing section 43 accepts the individually sharing user update request received by the information transmission/reception section 41. The content marker information processing section 43 updates the content marker table stored in the content marker storage section 44 based on the accepted individually sharing user update request.

To be specific, when the individually sharing user update request is received by the information transmission/reception section 41, the content marker information processing section 43 specifies the individually sharing user specifying information stored in association with the content marker identification information included in the individually sharing user update request.

Further, the content marker information processing section 43 generates authorized view user identification information including a plurality of pieces of user identification information stored in the group storage section 48 in association with group identification information which is identical to the authorized view group identification information included in the accepted content marker registration request. Similarly, the content marker information processing section 43 generates forbidden view user identification information including a plurality of pieces of user identification information stored in the group storage section 48 in association with group identification information which is identical to the forbidden view group identification information included in the accepted content marker registration request.

Then, the content marker information processing section 43 updates the specified individually sharing user specifying information, based on the generated authorized view user identification information and the forbidden view user identification information.

Even with the content delivery system 1 configured as described above, actions and effects similar to those of the first exemplary embodiment can be exhibited.
Further, according to the content delivery system 1 of the third exemplary embodiment, when setting a plurality of users as users sharing content marker information, the information quantity input by a user can be reduced. This means that time and effort taken by a user who sets users sharing content marker information can be reduced.

It should be noted that the entirely sharing user specifying information registration request may include entirely sharing group identification information, instead of the entirely sharing user specifying information or in addition to the entirely sharing user specifying information. The entirely sharing group identification information is a basic value of information for identifying a group consisting of a plurality of users sharing content marker information. In this case, it is preferable that the entirely sharing user specifying information processing section 42 generates entirely sharing user specifying information including a plurality of pieces of user identification information stored in the group storage section 48 in association with group identification information which is identical to the entirely sharing group identification information.

Further, if the content marker registration request is transmitted to the service control functions 40 via the service selection functions 20, the service selection functions 20 may be adapted to generate individually sharing user specifying information based on the individually sharing group identification information. Similarly, if the individually sharing user update request is transmitted to the service control functions 40 via the service selection functions 20, the service selection functions 20 may be adapted to generate authorized view user identification information based on the authorized view group identification information, and generate forbidden view user identification information based on the forbidden view group identification information.

Further, it is preferable that the content delivery system 1 is configured to, when accepting a group registration request including a plurality of pieces of group identification information, acquire a plurality of pieces of user identification information stored in the group storage section 48 in association with the respective pieces of the group identification information included in the group registration request, and store the acquired pieces of user identification information and newly generated group identification information in the group storage section 48, in association with each other.

### FOURTH EXEMPLARY EMBODIMENT

Next, a content delivery system according to a fourth exemplary embodiment of the present invention will be described. The content delivery system of the fourth exemplary embodiment is different from the content delivery system of the first exemplary embodiment in that content marker information which can be viewed by each user is extracted beforehand. Accordingly, description will be given below focusing on such a difference.

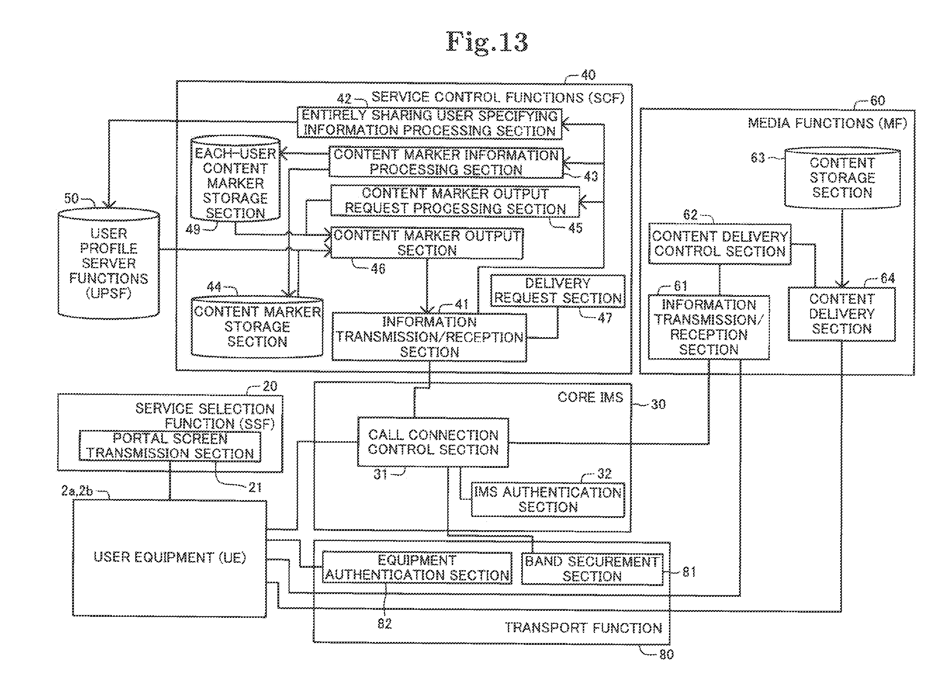

The service control functions 40 of this content delivery system 1 also include an each-user content marker storage section (each-user content marker information storage means) 49, in addition to the functions held by the service control functions 40 of the first exemplary embodiment, as shown in Fig. 13.

Each time a preset update cycle has elapsed or each time the content marker table is updated, for each of the pieces of user identification information, the content marker information processing section 43 extracts content marker information corresponding to such user identification information from the content marker information stored in the content marker storage section 44. Similar to the content marker output section 46 of the first exemplary embodiment, the content marker information processing section 43 extracts content marker information corresponding to the user identification information based on the user identification information, the entirely sharing user specifying information, and the individually sharing user specifying information.

Then, the content marker information processing section 43 performs processing to store the content marker identification information for identifying the extracted content marker information and the user identification information in the each-user content marker storage section 49, in association with each other.

When the content marker output request is accepted, the content marker output section 46 specifies the content marker identification information stored in the each-user content marker storage section 49 in association with the user identification information included in the content marker output request. The content marker output section 46 extracts the content marker information identified by the specified content marker identification information as content marker information corresponding to the user identification information.

Even with the content delivery system 1 configured as described above, actions and effects similar to those of the first exemplary embodiment can be exhibited.

Further, according to the content delivery system 1 of the fourth exemplary embodiment, when accepting a content marker output request, the content delivery system 1 is able to extract content marker information, based on the user identification information and the content marker identification information which have been stored in association with each other. As such, according to the content delivery system 1, content marker information can be extracted at a high speed.

### FIFTH EXEMPLARY EMBODIMENT

Next, a content delivery system according to a fifth exemplary embodiment of the present invention will be described. The content delivery system of the fifth exemplary embodiment is different from the content delivery system of the first exemplary embodiment in being configured such that content having a higher possibility of being unable to be viewed normally by a user of user equipment is less likely to be selected. Accordingly, description will be given below focusing on such a difference.

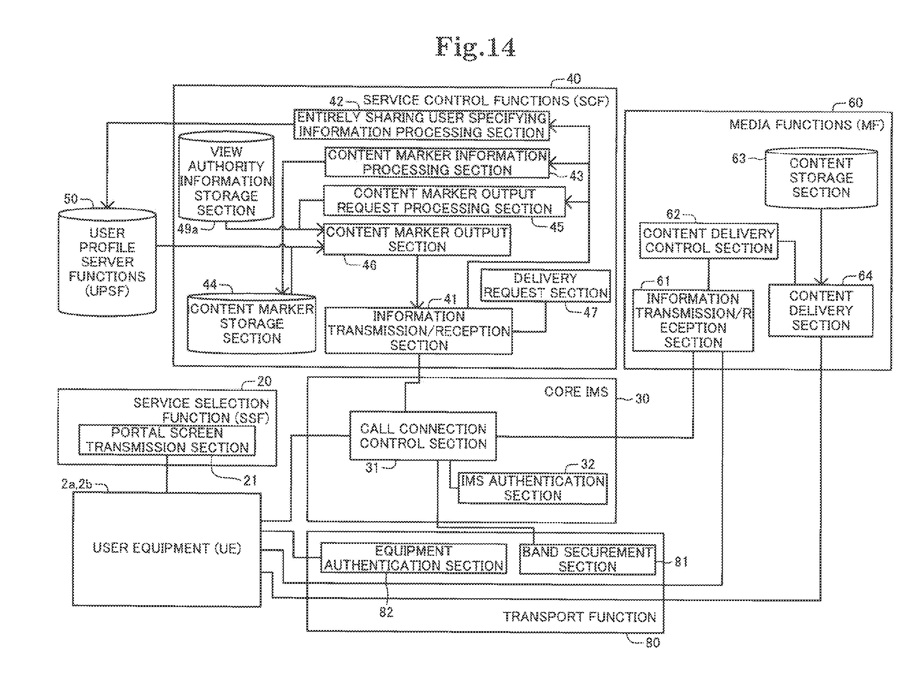

The service control functions 40 of this content delivery system 1 include a view authority information storage section 49a, in addition to the functions held by the service control functions 40 of the first exemplary embodiment, as shown in Fig. 14.

The view authority information storage section 49a stores a view authority table in association with user identification information. The view authority table is a table containing a plurality of pieces of view authority information. The view authority information consists of a set of content identification information and view availability information. The view availability information is information indicating whether or not to allow transmission of content data to the user equipment 2a or 2b. It should be noted that the view authority table may be stored in the user profile server functions 50.

In this example, the content marker output section 46 specifies a view authority table stored in association with the user identification information included in the content marker output request. The, among the pieces of the extracted content marker information, the content marker output section 46 only outputs content marker information including the content identification information stored in association with the view availability information (view allowance information) indicating that transmission of content data to the user equipment 2a or 2b is allowed, in the specified view authority table.

Then, the information transmission/reception section 41 transmits the content marker information, output by the content marker output section 46, to the user equipment 2a or 2b. Thereby, the user equipment 2a or 2b outputs the content marker information.

As such, it can be said that the information transmission/reception section 41 transmits, to the user equipment 2a or 2b, information for outputting content marker information such that content marker information, including content identification information for identifying content having a higher possibility of being unable to be viewed normally by the user of the user equipment 2a or 2b, is less likely to be selected by the user.

Even with the content delivery system 1 configured as described above, actions and effects similar to those of the first exemplary embodiment can be exhibited.
Farther, according to the content delivery system 1 of the fifth exemplary embodiment, when a user selects content marker information to thereby request viewing of the content specified by the content marker information, a situation that the user cannot view such content can be prevented from occurring.

It should be noted that in the fifth exemplary embodiment, the content delivery system 1 is configured not to transmit, to the user equipment 2a or 2b, content marker information associated with view availability information indicating that transmission of content data to the user equipment 2a or 2b is not allowed (view forbidden information).

Meanwhile, in an exemplary variation of the fifth exemplary embodiment, the content delivery system 1 may be configured to transmit sequence information representing the sequence that the user equipment 2a or 2b outputs pieces of content marker information, to the user equipment 2a or 2b together with the content marker information. In that case, as the sequence information, the content delivery system 1 generates information for causing the content marker information associated with the view allowance information to be output before the content marker information associated with the view forbidden information.
Even with this exemplary variation, actions and effects similar to those of the fifth exemplary embodiment can be exhibited.

Further, in another exemplary variation of the fifth exemplary embodiment, the content delivery system 1 may be configured to transmit view availability information to the user equipment 2a or 2b in association with content marker information.

In that case, the user equipment 2a or 2b outputs the content marker information associated with the view allowance information in a more distinguishable manner than the content marker information associated with the view forbidden information. For example, the user equipment 2a or 2b outputs the content marker information associated with the view allowance information in bold type, while outputting the content marker information associated with the view forbidden information in small type.

Further, in that case, the user equipment 2a or 2b may also output information indicating that viewing of the content is forbidden, in association with (for example, near) the content marker information associated with the view forbidden information .
Even with this exemplary variation, actions and effects similar to those of the fifth exemplary embodiment can be exhibited.

Further, in the fifth exemplary embodiment, the content delivery system 1 determines whether or not to transmit content marker information to the user equipment 2a or 2b, based on the view availability information.

Meanwhile, in another exemplary variation of the fifth exemplary embodiment, the content delivery system 1 may be configured to determine whether or not to transmit content marker information to the user equipment 2a or 2b based on reproduction capability information representing the capability of outputting content by the user equipment 2a or 2b. For example, the reproduction capability information may be information representing the resolution of the display provided to the user equipment 2a or 2b, information representing the information processing capability of the central processing unit provided to the user equipment 2a or 2b, information representing the format of content data that the user equipment 2a or 2b is able to output, information representing the storing capacity of the storage device provided to the user equipment 2a or 2b, or the like. It should be noted that it is preferable that the reproduction capability information is stored in the user profile server functions 50 in association with the user identification information.

In that case, the content delivery system 1 is configured to specify the content that the user equipment 2a or 2b is unable to output normally based on the reproduction capability information, and not to transmit content marker information including the content identification information for identifying the specified content to the user equipment 2a or 2b.
Even with this exemplary variation, actions and effects similar to those of the fifth exemplary embodiment can be exhibited.

Further, in another exemplary variation of the fifth exemplary embodiment, the content delivery system 1 may be configured to determine whether or not to transmit content marker information to the user equipment 2a or 2b based on available band information representing the available band which is an available communication bandwidth on the communication channel between the user equipment 2a or 2b and the media server 4b.

In that case, the content delivery system 1 is configured to acquire available band information from the core IMS 30 or the transport function 80, specify content for which content data cannot be transmitted at a sufficiently high (for example, higher than the bit rate of the content data) communication rate based on the acquired available band information, and not to transmit content marker information including the content identification information for identifying the specified content to the user equipment 2a or 2b.
Even with this exemplary variation, actions and effects similar to those of the fifth exemplary embodiment can be exhibited.

### SIXTH EXEMPLARY EMBODIMENT

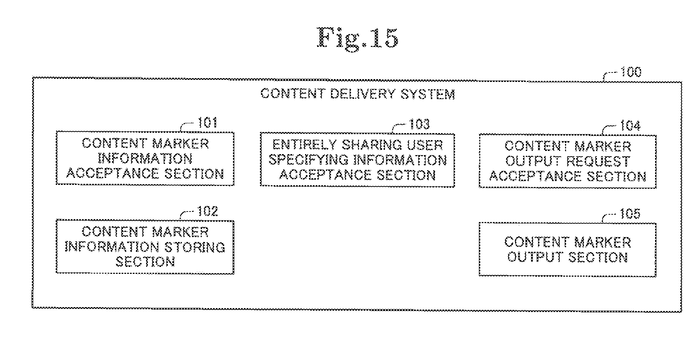

Next, a content delivery system, according to a sixth exemplary embodiment of the present invention, will be described with reference to Fig. 15.
A content delivery system 100 according to the sixth exemplary embodiment includes:
a content marker information acceptance section (content marker information acceptance means) 101 that accepts a content marker registration request, the content marker registration request including content marker information including content identification information for identifying content, and individually sharing user specifying information for specifying users sharing the content marker information;
a content marker information storing section (content marker information storing means) 102 that performs processing to store, in a storage device, the content marker information and the individually sharing user specifying information which are included in the accepted content marker registration request, in association with each other;
an entirely sharing user specifying information acceptance section (entirely sharing user specifying information acceptance means) 103 that accepts entirely sharing user specifying information which is a basic value of information for specifying users sharing pieces of the stored content marker information;
a content marker output request acceptance section (content marker output request acceptance means) 104 that accepts a content marker output request which includes user identification information for identifying a user and requests to output content marker information; and
a content marker output section (content marker output means) 105 that extracts content marker information corresponding to the user identification information from the pieces of the stored content marker information, based on the user identification information included in the accepted content marker output request, the accepted entirely sharing user specifying information, and the stored individually sharing user specifying information, and outputs the extracted content marker information.

According to this configuration, users who share content marker information can be set for each of the pieces of content marker information. Consequently, the pieces of content marker information, registered by a user, can be shared with different users, respectively. Further, by setting entirely sharing user specifying information, the users who are common in the entire content marker information can be set as the users sharing the content marker information. As a result, it is possible to reduce time and effort taken by a user who sets the users sharing the content marker information.

As such, according to the content delivery system 100, it is possible to share respective pieces of content marker information with different users while reducing time and effort taken by a user who sets the users sharing the content marker information.

While the present invention has been described with reference to the exemplary embodiments thereof, the present invention is not limited to the above-described exemplary embodiment. It will be understood by those skilled in that art that various changes in form and details may be made therein within the scope of the present invention.

For example, in the respective exemplary variations of the exemplary embodiments, content marker registration information may include registered user identification information for identifying the user who registered the content marker information. In that case, when the user equipment 2a or 2b allows a list of content marker information to be displayed, it is preferable that the user equipment 2a or 2b is adapted to allow registered user identification information for identifying the user, who registered each of the pieces of content marker information, to be displayed as well.

Further, in the respective exemplary variations of the exemplary embodiments, instead of the service control server 4a and the media server 4b, a server having functions of both the service control server 4a and the media server 4b may be provided.
Further, while the media server 4b has all of the media functions 60 in the respective exemplary embodiments, it is also acceptable that a first server has part of the media functions 60 (media control functions) and a second server has the remaining part of the media functions 60 (media delivery functions).

Further, in the exemplary variations of the respective exemplary embodiments, the application server system 4 may include the portal server 5. Further, the service control server 4a or the media server 4b may have the functions of the portal server 5.
Further, in the exemplary variations of the respective exemplary embodiments, a plurality of servers having the media delivery functions of the media functions 60 may be provided.

Further, in the exemplary variations of the respective exemplary embodiments, while the connection control system 3 includes a plurality of connection control servers (connection control servers 3a, 3b, etc.), the connection control system 3 may include only one connection control server.

It should be noted that in the respective exemplary embodiments, while each of the user equipment 2a and 2b is a set top box, it may be a mobile telephone set, a PDA (Personal Data Assistance), a smart phone, a PHS (Personal Handyphone System), a game device, a car navigation device, a personal computer, or the like.
Further, while content is videos in the respective exemplary embodiments, it may be only pictures or sounds.

It should be noted that the content marker table in the respective exemplary embodiments may be stored as information (temporal information (action data)) which is to be deleted when a predetermined condition is satisfied (for example, when a preset time period has elapsed, or when a preset capacity is exceeded), or may be stored as information (stored information (user profile)) which is to be edited (added, changed, or deleted) only with an instruction by the manager or the user of the content delivery system 1. Further, the entirely sharing user table in the respective exemplary embodiments may be stored as temporal information or stored information.

Further, while in the respective exemplary embodiments, the components of the content delivery system 1 are described as the components constituting the IMS (IP Multimedia Subsystem), they may be described as the components constituting the MMS (Multimedia Messaging Service).

Further, the content marker information may be referred to as a "content marker". Further, information including content marker information and individually sharing user specifying information may be referred to as a "content marker". Further, content marker information may be referred to as bookmark information.

Further, it the content delivery system 1 is applied to an IPTV system, content marker information may be referred to as an "IPTV content marker". Further, if the content delivery system 1 is applied to a VoD system, content marker information may be referred to as "available CoD". In addition, if the content delivery system 1 is applied to a BC system, content marker information may be referred to as "BC bookmarks". Further, if the content delivery system 1 is applied to an nPVR system, content marker information may be referred to as "N-PVR items".

While in the respective exemplary embodiments, each of the functions of the content delivery system 1 is realized by the CPU which executes a program (software), it may be realized by hardware such as a circuit.

Further, while in the respective exemplary embodiments, the program is stored in a storage device, it may be stored in a computer-readable recording medium. For example, a recording medium is a portable medium such as a flexible disk, an optical disk, a magneto-optical disk, a semiconductor memory, or the like.

Further, as another exemplary variation of the exemplary embodiments, any combinations of the exemplary embodiments and the exemplary variations described above may be adopted.

### <Supplementary Notes>

The whole or part of the exemplary embodiments disclosed above can be described as, but not limited to, the following supplementary notes.

### (Supplementary Note 1)

A content delivery system comprising:
content marker information acceptance means for accepting a content marker registration request, the content marker registration request including content marker information including content identification information for identifying content, and individually sharing user specifying information for specifying a user sharing the content marker information;
content marker information storing means for performing processing to store, in a storage device, the content marker information and the individually sharing user specifying information which are included in the accepted content marker registration request, in association with each other;
entirely sharing user specifying information acceptance means for accepting entirely sharing user specifying information which is a basic value of information for specifying a user sharing the stored content marker information;
content marker output request acceptance means for accepting a content marker output request which includes user identification information for identifying a user and requests to output content marker information; and
content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

According to this configuration, users who share content marker information can be set for each of the pieces of content marker information. Consequently, the pieces of content marker information, registered by a user, can be shared with different users, respectively. Further, by setting entirely sharing user specifying information, the users who are common in the entire content marker information can be set as the users sharing the content marker information, As a result, it is possible to reduce time and effort taken by a user who sets the users sharing the content marker information.

As such, according to the content delivery system, it is possible to share respective pieces of content marker information with different users while reducing time and effort taken by a user who sets the users sharing the content marker information.

### (Supplementary Note 2)

The content delivery system according to supplementary note 1, further comprising:
an application server system, and
a connection control system, wherein
the connection control system is adapted to receive equipment specifying information transmitted by user equipment and establish a connection between the application server system and the user equipment based on the received equipment specifying information, and
the application server system is adapted to transmit content data representing content to the user equipment with which the connection is established by the connection control system.

### (Supplementary Note 3)

The content delivery system according to supplementary note 2, wherein
the application server system is adapted to receive a content view request which is transmitted by the user equipment and includes the content marker information, and transmit, to the user equipment, content data representing content identified by the content marker information included in the received content view request.

According to this configuration, the user of the user equipment is able to view desired content without performing troublesome operation for identifying such content. As a result, the user-friendliness can be improved.

### (Supplementary Note 4)

The content delivery system according to supplementary note 2 or 3, wherein
the connection control system is adapted to receive user authentication information transmitted by the user equipment and input by a user of the user equipment, and
the content delivery system includes:
user authentication reference information storage means for storing user authentication reference information in advance; and
user authentication means for determining whether or not the user authentication information received by the connection control system and the user authentication reference information stored in the user authentication reference information storage means correspond to each other to thereby authenticate whether or not the user who input the user authentication information is a valid user, and
the content marker output request acceptance means is adapted to accept the content marker output request including user identification information for identifying the user authenticated as a valid user by the user authentication means.

According to this configuration, the content delivery system accepts a content marker output request including user identification information for identifying a user authorized as a valid user. Thereby, it is possible to prevent the content delivery system from performing processing based on a content marker output request transmitted by a user unauthorized as a valid user. As a result, it is possible to prevent content marker information from being viewed by invalid users.

### (Supplementary Note 5)

The content delivery system according to any of supplementary notes 1 to 4, further comprising
entirely sharing user specifying information storing means for performing processing to store, in the storage device, the accepted entirely sharing user specifying information and user identification information for identifying a user of user equipment having transmitted the entirely sharing user specifying information, in association with each other, wherein
the content marker information storing means is adapted to store, in the storage device, the content marker information and the individually sharing user specifying information which are included in the accepted content marker registration request, and user identification information for identifying a user of user equipment having transmitted the content marker registration request, in association with each other, and
the content marker output means is adapted to determine, based on the individually sharing user specifying information stored in association with the content marker information, the entirely sharing user specifying information stored in association with the user identification information stored in association with the content marker information, and the user identification information included in the accepted content marker output request, whether or not to extract the content marker information as content marker information corresponding to the user identification information.

### (Supplementary Note 6)

The content delivery system according to any of supplementary notes 1 to 5, wherein
the entirely sharing user specifying information includes authorized view user identification information for identifying a user authorized to share the content marker information,
the individually sharing user specifying information includes authorized view user identification information for identifying a user authorized to share the content marker information, and forbidden view user identification, information for identifying a user forbidden to share the content marker information, and
if both a first condition and a second condition are satisfied, the first condition being that at least one of the authorized view user identification information included in the individually sharing user specifying information and the authorized view user identification information included in the entirely sharing user specifying information includes the user identification information included in the accepted content marker output request, the second condition being that the forbidden view user identification information included in the individually sharing user specifying information does not include the user identification information included in the content marker output request, the content marker output means is adapted to extract the content marker information stored in association with the individually sharing user specifying information as content marker information corresponding to the user identification information.

### (Supplementary Note 7)

The content delivery system according to any of supplementary notes 1 to 5, wherein
the entirely sharing user specifying information includes authorized view user identification information for identifying a user authorized to share the content marker information,
the individually sharing user specifying information includes forbidden view user identification information for identifying a user forbidden to share the content marker information, and
if both a first condition and a second condition are satisfied, the first condition being that the authorized view user identification information included in the entirely sharing user specifying information includes the user identification information included in the accepted content marker output request, the second condition being that the forbidden view user identification information included in the individually sharing user specifying information does not include the user identification information included in the content marker output request, the content marker output means is adapted to extract the content marker information stored in association with the individually sharing user specifying information as content marker information corresponding to the user identification information.

### (Supplementary Note 8)

The content delivery system according to supplementary note 7, wherein
the content marker output means is adapted to specify the user identification information stored in association with the entirely sharing user specifying information including the user identification information, included in the accepted content marker output request, as authorized view user identification information, acquire the content marker information and the individually sharing user specifying information which are stored in association with the specified user identification information, in association with each other, for each piece of the acquired individually sharing user specifying information, determine whether or not the forbidden view user identification information included in the individually sharing user specifying information includes the user identification information included in the content marker output request, if determining that the forbidden view user identification information included in the individually sharing user specifying information includes the user identification information included in the content marker output request, delete the individually sharing user specifying information and content marker information associated with the individually sharing user specifying information from the acquired content marker information and the acquired individually sharing user specifying information, and extract remaining content marker information, of the acquired content marker information, as content marker information corresponding to the user identification information.

### (Supplementary Note 9)

The content delivery system according to any of supplementary notes 1 to 5, wherein
the entirely sharing user specifying information includes authorized view user identification information for identifying a user authorized to share the content marker information,
the individually sharing user specifying information includes authorized view user identification information for identifying a user authorized to share the content marker information, and
the content marker output means is adapted to extract the content marker information stored in association with the individually sharing user specifying information as content marker information corresponding to the user identification information if a condition is satisfied, the condition being that at least one of the authorized view user identification information included in the individually sharing user specifying information and the authorized view user identification information included in the entirely sharing user specifying information includes the user identification information included in the accepted content marker output request.

### (Supplementary Note 10)

The content delivery system according to supplementary note 6, wherein
the content marker information storing means is adapted to store, in the storage device, the content marker information and the individually sharing user specifying information which are included in the accepted content marker registration request, the user identification information for identifying the user of the user equipment having transmitted the content marker registration request, and content marker identification information for identifying the content marker information, in association with one another,
the content marker information acceptance means is adapted to accept an individually sharing user update request including the content marker identification information, the authorized view user identification information for identifying the user authorized to share the content marker information, and the forbidden view user identification information for identifying the user forbidden to share the content marker information, and
the content marker information storing means is adapted to,
if the user identification information included in the forbidden view user identification information included in the accepted individually sharing user update request is included in the authorized view user identification information included in the individually sharing user specifying information stored in association with the content marker identification information included in the individually sharing user update request, delete the user identification information from the authorized view user identification information, while if the user identification information is not included in the authorized view user identification information, add the user identification information to the forbidden view user identification information included in the individually sharing user specifying information, and
if the user identification information included in the authorized view user identification information included in the accepted individually sharing user update request is included in the forbidden view user identification information included in the individually sharing user specifying information stored in association with the content marker identification information included in the individually sharing user update request, delete the user identification information from the forbidden view user identification information, while if the user identification information is not included in the forbidden view user identification information, add the user identification information to the authorised view user identification information included in the individually sharing user specifying information.

### (Supplementary Note 11)

The content delivery system according to any of supplementary notes 1 to 5, wherein
the entirely sharing user specifying information includes authorized view user identification information for identifying a user authorized to share the content marker information,
the individually sharing user specifying information includes authorized view user identification information for identifying a user authorized to share the content marker information, and
the content marker output means is adapted to extract the content marker information stored in association with the individually sharing user specifying information as content marker information corresponding to the user identification information if, in a case where the authorized view user identification information included in the individually sharing user specifying information is blank information, the authorized view user identification information included in the entirely sharing user specifying information includes the user identification information included in the accepted content marker output request, or if, in a case where the authorized view user identification information included in the individually sharing user specifying information is not blank information, the authorized view user identification information included in the individually sharing user specifying information includes the user identification information included in the content marker output request.

### (Supplementary Note 12)

The content delivery system according to supplementary note 11, wherein
the content marker information storing means is adapted to store, in the storage device, the content marker information and the individually sharing user specifying information which are included in the accepted content marker registration request, the user identification information for identifying the user of the user equipment having transmitted the content marker registration request, and content marker identification information for identifying the content marker information, in association with one another,
the content marker information acceptance means is adapted to accept an individually sharing user update request including the content marker identification information and the individually sharing user specifying information, and
the content marker information storing means is adapted to replace the individually sharing user specifying information stored in association with the content marker identification information included in the accepted individually sharing user update request, with the individually sharing user specifying information included in the individually sharing user update request.

### (Supplementary Note 13)

The content delivery system according to supplementary note 11, wherein
the content marker information storing means is adapted to store, in the storage device, the content marker information and the individually sharing user specifying information which are included in the accepted content marker registration request, the user identification information for identifying the user of the user equipment having transmitted the content marker registration request, and content marker identification information for identifying the content marker information, in association with one another,
the content marker information acceptance means is adapted to accept an individually sharing user update request including the content marker identification information, the authorized view user identification information for identifying the user authorized to share the content marker information, and the forbidden view user identification information for identifying the user forbidden to share the content marker information, and
the content marker information storing means is adapted to
delete the user identification information included in the forbidden view user identification information included in the accepted individually sharing user update request, from the authorized view user identification information included in the individually sharing user specifying information stored in association with the content marker identification information included in the individually sharing user update request, and
add the user identification information included in the authorized view user identification information included in the accepted individually sharing user update request, to the authorized view user identification information included in the individually sharing user specifying information stored in association with the content marker identification information included in the individually sharing user update request.

### (Supplementary Note 14)

The content delivery system according to any of supplementary notes 1 to 13, further comprising
group information storage means for storing a plurality of pieces of user identification information and group identification information for identifying a group including a plurality of users identified by the pieces of the user identification information, wherein
the content marker information acceptance means is adapted to accept a content marker registration request including content marker information and individually sharing group identification information for identifying a group including a plurality of users sharing the content marker information, and
the content marker information storing means is adapted to perform processing to store, in the storage device, individually sharing user specifying information including a plurality of pieces of user identification information stored in association with group identification information which is identical to the individually sharing group identification information included in the accepted content marker registration request, and the content marker information included in the content marker registration request in association with each other.

According to this configuration, when a plurality of users are set as users sharing content marker information, the information quantity input by a user can be reduced. This means that time and effort taken by a user who sets the users sharing content marker information can be reduced.

### (Supplementary Note 15)

The content delivery system according to any of supplementary notes 1 to 14, wherein
the content marker information storing means is adapted to store, in the storage device, the content marker information and the individually sharing user specifying information which are included in the accepted content marker registration request, and content marker identification information for identifying the content marker information, in association with each other,
the content marker information storing means is adapted to perform processing to extract content marker information corresponding to the user identification information from the stored content marker information, based on the user identification information, the accepted entirely sharing user specifying information, and the stored individually sharing user specifying information, and store, in the storage device, the content marker identification information for identifying the extracted content marker information, and the user identification information, in association with each other, and
the content marker output means is adapted to extract the content marker information identified by the content marker identification information stored in association with the user identification information included in the accepted content marker output request, as content marker information corresponding to the user identification information.

According to this configuration, when accepting a content marker output request, the content delivery system is able to extract content marker information, based on the user identification information and the content marker identification information which have been stored in association with each other. As such, according to the content delivery system described above, content marker information can be extracted at a high speed.

### (Supplementary Note 16)

The content delivery system according to any of supplementary notes 1 to 15, wherein
the content marker output request acceptance means is adapted to receive the content marker output request transmitted by user equipment to thereby accept the content marker output request, and
the content delivery system further comprises content marker transmission means for transmitting the content marker information output by the content marker output means, to the user equipment having transmitted the content marker output request.

### (Supplementary Note 17)

The content delivery system according to supplementary note 16, wherein
the content marker transmission means is adapted to transmit information for outputting content marker information to the user equipment such that content marker information including content identification information for identifying content having a. higher possibility of being unable to be viewed normally by a user of the user equipment has a lower possibility of being selected by the user.

According to this configuration, when a user selects content marker information to thereby request viewing of the content specified by the content marker information, a situation that the user cannot view such content can be prevented from occurring.

### (Supplementary Note 18)

A content delivery system comprising :
an application server system, and
a connection control system, wherein
the connection control system includes a core IMS (Internet Protocol Multimedia Subsystem) that receives equipment specifying information transmitted by user equipment, and establishes a connection between the application server system and the user equipment based on the received equipment specifying information,
the application server system includes:
   media functions for transmitting content data representing content to the user equipment with which the connection is established by the connection control system;
   service control functions for controlling a service provided by the media functions; and
   user profile server functions for storing profile information of a user of the user equipment, and
the application server system further includes:
   content marker information acceptance means for accepting a content marker registration request by receiving the content marker registration request via the core IMS, the content marker registration request including content marker information which is information transmitted by the user equipment and is information including content identification information for identifying content, and individually sharing user specifying information for specifying a user sharing the content marker information;
   content marker information storing means for performing processing to store, in the user profile server functions or the service control functions, the content marker information and the individually sharing user specifying information which are stored in the accepted content marker registration request, in association with each other;
   entirely sharing user specifying information acceptance means for accepting entirely sharing user specifying information by receiving the entirely sharing user specifying information via the core IMS, the entirely sharing user specifying information being information transmitted by the user equipment and being information as a basic value of information for specifying a user sharing the stored content marker information;
   content marker output request acceptance means for accepting a content marker output request by receiving the content marker output request, the content marker output request being information transmitted by the user equipment and being information including user identification information for identifying a user and requesting to output content marker information;
   content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information; and
   content marker transmission means for transmitting the output content marker information to the user equipment having transmitted the content marker output request.

### (Supplementary Note 19)

A content delivery method comprising:
accepting a content marker registration request, the content marker registration request including content marker information including content identification information for identifying content, and individually sharing user specifying information for specifying a user sharing the content marker information;
performing processing to store, in a storage device, the content marker information and the individually sharing user specifying information which are included in the accepted content marker registration request, in association with each other;
accepting entirely sharing user specifying information which is a basic value of information for specifying a user sharing the stored content marker information;
accepting a content marker output request which includes user identification information for identifying a user and requests to output content marker information; and
extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

### (Supplementary Note 20)

The content delivery method according to supplementary note 19, further comprising:
by a connection control system, receiving equipment specifying information transmitted from user equipment, and establishing a connection between an application server system and the user equipment based on the received equipment specifying information, and
by the application server system, transmitting content data representing content to the user equipment with which the connection is established by the connection control system.

### (Supplementary Note 21)

An application server system comprising:
content marker information acceptance means for accepting a content marker registration request, the content marker registration request including content marker information including content identification information for identifying content, and individually sharing user specifying information for specifying a user sharing the content marker information;
content marker information storing means for performing processing to store, in a storage device, the content marker information and the individually sharing user specifying information which are included in the accepted content marker registration request, in association with each other;
entirely sharing user specifying information acceptance means for accepting entirely sharing user specifying information which is a basic value of information for specifying a user sharing the stored content marker information;
content marker output request acceptance means for accepting a content marker output request which includes user identification information for identifying a user and requests to output content marker information; and
content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

### (Supplementary Note 22)

The application server system according to supplementary note 21, wherein
the application server system is adapted to transmit content data representing content to user equipment with which a connection is established by a connection control system.

### (Supplementary Note 23)

A computer-readable recording medium storing a program for causing an application server system to realize:
content marker information acceptance means for accepting a content marker registration request, the content marker registration request including content marker information including content identification information for identifying content, and individually sharing user specifying information for specifying a user sharing the content marker information;
content marker information storing means for performing processing to store, in a storage device, the content marker information and the individually sharing user specifying information which are included in the accepted content marker registration request, in association with each other;
entirely sharing user specifying information acceptance means for accepting entirely sharing user specifying information which is a basic value of information for specifying a user sharing the stored content marker information;
content marker output request acceptance means for accepting a content marker output request which includes user identification information for identifying a user and requests to output content marker information; and
content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

### (Supplementary Note 24)

The recording medium according to supplementary note 23, wherein
the program is adapted to cause the application server system to transmit content data representing content to user equipment with which a connection is established by a connection control system.

### (Supplementary Note 25)

User equipment comprising:
content marker information transmission means for transmitting a content marker registration request, the content marker registration request including content marker information including content identification information for identifying content, and individually sharing user specifying information for specifying a user sharing the content marker information;
entirely sharing user specifying information transmission means for transmitting entirely sharing user specifying information which is a basic value of information for specifying a user sharing the content marker information;
content marker output request transmission means for transmitting a content marker output request which includes user identification information for identifying a user and requests to output content marker information; and
content marker list output means for receiving the content marker information and outputting the received content marker information.

### (Supplementary Note 26)

A computer-readable recording medium storing a program for causing user equipment to realize:
content marker information transmission means for transmitting a content marker registration request, the content marker registration request including content marker information including content identification information for identifying content, and individually sharing user specifying information for specifying a user sharing the content marker information;
entirely sharing user specifying information transmission means for transmitting entirely sharing user specifying information which is a basic value of information for specifying a user sharing the content marker information;
content marker output request transmission means for transmitting a content marker output request which includes user identification information for identifying a user and requests to output content marker information; and
content marker list output means for receiving the content marker information and outputting the received content marker information.

This application is based upon and claims the benefit of priority from Japanese patent application No. 2010-013889, filed on January 26, 2010, the disclosure of which is incorporated herein in its entirety by reference.

### INDUSTRIAL APPLICABILITY

The present invention is applicable to a video-on-demand system for deliverying content over IP networks, an IPTV system for performing TV broadcasting over IP networks, and the like.

### REFERENCE NUMERALS

- 1: content delivery system
- 2a, 2b: user equipment
- 3: connection control system
- 3a, 3b: connection control server
- 4: application server system
- 4a: service control server
- 4b: media server
- 5: portal server
- 11: request transmission section
- 11a: content marker registration request transmission section
- 11b: individually sharing user update request transmission section
- 11c: entirely sharing user registration request transmission section
- 11d: content marker output request transmission section
- 11e: content transmission request transmission section
- 12: content marker list output section
- 13: content marker specifying information acceptance section
- 14: content output section
- 20: service selection function
- 21: portal screen transmission section
- 30: core IMS
- 31: call connection control section
- 32: IMS authentication section
- 40: service control functions
- 41: information transmission/reception section
- 42: entirely sharing user specifying information processing section
- 43: content marker information processing section
- 44: content marker storage section
- 45: content marker output request processing section
- 46: content marker output section
- 47: delivery request section
- 48: group storage section
- 49: each-user content marker storage section
- 49a: view authority is formation storage section
- 50: user profile server functions
- 60: media functions
- 61: information transmission/reception section
- 62: content delivery control section
- 63: content storage section
- 64: content delivery section
- 80: transport function
- 81: band securement section
- 82: equipment authentication section
- 100: content delivery system
- 101: content marker information acceptance section
- 102: content marker information storing section
- 103: entirely sharing user specifying information acceptance section
- 104: content marker output request acceptance section
- 105: content marker output section
- NW1: user side communication network
- NW2: service provider side communication network

## Claims

1. A content delivery system comprising:
content marker information acceptance means for accepting a content marker registration request, the content marker registration request including content marker information including content identification information for identifying content, and individually sharing user specifying information for specifying a user sharing the content marker information;
content marker information storing means for performing processing to store, in a storage device, the content marker information and the individually sharing user specifying information which are included in the accepted content marker registration request, in association with each other
entirely sharing user specifying information acceptance means for accepting entirely sharing user specifying information which is a basic value of information for specifying a user sharing the stored content marker information;
content marker output request acceptance means for accepting a content marker output request which includes user identification information for identifying a user and requests to output content marker information; and
content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information,

2. The content delivery system according to Claim 1, further comprising:
an application server system, and
a connection control system, wherein
the connection control system is adapted to receive equipment specifying information transmitted by user equipment, and establish a connection between the application server system and the user equipment based on the received equipment specifying information, and
the application server system is adapted to transmit content data representing content to the user equipment with which the connection is established by the connection control system.

3. The content delivery system according to Claim 2, wherein
the application server system is adapted to receive a content view request which is transmitted by the user equipment and includes the content marker information, and transmit, to the user equipment, content data representing content identified by the content marker information included in the received content view request.

4. The content delivery system according to Claim 2 or 3, wherein
the connection control system is adapted to receive user authentication information transmitted by the user equipment and input by a user of the user equipment, and
the content delivery system includes:
user authentication reference information storage means for storing user authentication reference information in advance; and
user authentication means for determining whether or not the user authentication information received by the connection control system and the user authentication reference information stored in the user authentication reference information storage means correspond to each other to thereby authenticate whether or not the user who input the user authentication information is a valid user, and
the content marker output request acceptance means is adapted to accept the content marker output request including user identification information for identifying the user authenticated as a valid user by the user authentication means.

5. The content delivery system according to any of Claims 1 to 4, further comprising
entirely sharing user specifying information storing means for performing processing to store, in the storage device, the accepted entirely sharing user specifying information and user identification information for identifying a user of user equipment having transmitted the entirely sharing user specifying information, in association with each other, wherein
the content marker information storing means is adapted to store, in the storage device, the content marker information and the individually sharing user specifying information which are included in the accepted content marker registration request, and user identification information for identifying a user of user equipment having transmitted the content marker registration request, in association with each other, and
the content marker output means is adapted to determine, based on the individually sharing user specifying information stored in association with the content marker information, the entirely sharing user specifying information stored in association with the user identification information stored in association with the content marker information, and the user identification information included in the accepted content marker output request, whether or not to extract the content marker information as content marker information corresponding to the user identification information.

6. The content delivery system according to any of Claims 1 to 5, wherein
the entirely sharing user specifying information includes authorized view user identification information for identifying a user authorized to share the content marker information,
the individually sharing user specifying information includes authorized view user identification information for identifying a user authorized to share the content marker information, and forbidden view user identification information for identifying a user forbidden to share the content marker information, and
if both a first condition and a second condition are satisfied, the first condition being that at least one of the authorized view user identification information included in the individually sharing user specifying information and the authorized view user identification information included in the entirely sharing user specifying information includes the user identification information included in the accepted content marker output request, the second condition being that the forbidden view user identification information included in the individually sharing user specifying information does not include the user identification information included in the content marker output request, the content marker output means is adapted to extract the content marker information stored in association with the individually sharing user specifying information as content marker information corresponding to the user identification information.

7. The content delivery system according to any of Claims 1 to 5, wherein
the entirely sharing user specifying information includes authorized view user identification information for identifying a user authorized to share the content marker information,
the individually sharing user specifying information includes forbidden view user identification information for identifying a user forbidden to share the content marker information, and
if both a first condition and a second condition are satisfied, the first condition being that the authorized view user identification information included in the entirely sharing user specifying information includes the user identification information included in the accepted content marker output request, the second condition being that the forbidden view user identification information included in the individually sharing user specifying information does not include the user identification information included in the content marker output request, the content marker output means is adapted to extract the content marker information stored in association with the individually sharing user specifying information as content marker information corresponding to the user identification information.

8. The content delivery system according to Claim 7, wherein
the content marker output means is adapted to specify the user identification information stored in association with the entirely sharing user specifying information including the user identification information, included in the accepted content marker output request, as authorized view user identification information, acquire the content marker information and the individually sharing user specifying information which are stored in association with the specified user identification information, in association with each other, for each piece of the acquired individually sharing user specifying information, determine whether or not the forbidden view user identification information included in the individually sharing user specifying information includes the user identification information included in the content marker output request, if determining that the forbidden view user identification information included in the individually sharing user specifying information includes the user identification information included in the content marker output request, delete the individually sharing user specifying information and the content marker information associated with the Individually sharing user specifying information from the acquired content marker information and the acquired individually sharing user specifying information, and extract remaining content marker information, of the acquired content marker information, as content marker information corresponding to the user identification information.

9. The content delivery system according to Claim 6, wherein
the content marker information storing means is adapted to store, in the storage device, the content marker information and the individually sharing user specifying information which are included in the accepted content marker registration request, the user identification information for identifying the user of the user equipment having transmitted the content marker registration request, and content marker identification information for identifying the content marker information, in association with one another,
the content marker information acceptance means is adapted to accept an individually sharing user update request including the content marker identification information, the authorized view user identification information for identifying the user authorized to share the content marker information, and the forbidden view user identification information for identifying the user forbidden to share the content marker information, and
the content marker information storing means is adapted to,
if the user identification information included in the forbidden view user identification information included in the accepted individually sharing user update request is included in the authorized view user identification information included in the individually sharing user specifying information stored in association with the content marker identification information included in the individually sharing user update request, delete the user identification information from the authorized view user identification information, while if the user identification information is not included in the authorized view user identification information, add the user identification information to the forbidden view user identification information included in the individually sharing user specifying information, and
if the user identification information included in the authorized view user identification information included in the accepted individually sharing user update request is included in the forbidden view user identification information included in the individually sharing user specifying information stored in association with the content marker identification information included in the individually sharing user update request, delete the user identification information from the forbidden view user identification information, while if the user identification information is not included in the forbidden view user identification information, add the user identification information to the authorized view user identification information included in the individually sharing user specifying information.

10. The content delivery system according to any of Claims 1 to 9, further comprising
group information storage means for storing a plurality of pieces of user identification information and group identification information for identifying a group including a plurality of users identified by the pieces of the user identification information, wherein
the content marker information acceptance means is adapted to accept a content marker registration request including content marker information and individually sharing group identification information for identifying a group including a plurality of users sharing the content marker information, and
the content marker information storing means is adapted to perform processing to store, in the storage device, individually sharing user specifying information including a plurality of pieces of user identification information stored in association with group identification information which is identical to the individually sharing group identification information included in the accepted content marker registration request, and the content marker information included in the content marker registration request, in association with each other.

11. The content delivery system according to any of Claims 1 to 10, wherein
the content marker information storing means is adapted to store, in the storage device, the content marker information and the individually sharing user specifying information which are included in the accepted content marker registration request, and content marker identification information for identifying the content marker information, in association with each other,
the content marker information storing means is adapted to perform processing to extract content marker information corresponding to the user identification information from the stored content marker information, based on the user identification information, the accepted entirely sharing user specifying information, and the stored individually sharing user specifying information, and store, in the storage device, the content marker identification information for identifying the extracted content marker information, and the user identification information, in association with each other, and
the content marker output means is adapted to extract the content marker information identified by the content marker identification information stored in association with the user identification information included in the accepted content marker output request, as content marker information corresponding to the user identification information.

12. The content delivery system according to any of Claims 1 to 11, wherein
the content marker output request acceptance means is adapted to receive the content marker output request transmitted by user equipment to thereby accept the content marker output request, and
the content delivery system further comprises content marker transmission means for transmitting the content marker information output by the content marker output means, to the user equipment having transmitted the content marker output request.

13. The content delivery system according to Claim 12, wherein
the content marker transmission means is adapted to transmit information for outputting content marker information to the user equipment such that content marker information including content identification information for identifying content having a higher possibility of being unable to be viewed normally by a user of the user equipment has a lower possibility of being selected by the user.

14. A content delivery system comprising:
an application server system, and
a connection control system, wherein
the connection control system includes a core IMS (Internet Protocol Multimedia Subsystem) that receives equipment specifying information transmitted by user equipment, and establishes a connection between the application server system and the user equipment based on the received equipment specifying information,
the application server system includes:
media functions for transmitting content data representing content to the user equipment with which the connection is established by the connection control system;
service control functions for controlling a service provided by the media functions; and
user profile server functions for storing profile information of a user of the user equipment, and
the application server system further includes:
content marker information acceptance means for accepting a content marker registration request by receiving the content marker registration request via the core IMS, the content marker registration request including content marker information which is information transmitted by the user equipment and is information including content identification information for identifying content, and individually sharing user specifying information for specifying a user sharing the content marker information;
content marker information storing means for performing processing to store, in the user profile server functions or the service control functions, the content marker information and the individually sharing user specifying information which are stored in the accepted content marker registration request, in association with each other;
entirely sharing user specifying information acceptance means for accepting entirely sharing user specifying information by receiving the entirely sharing user specifying information via the core IMS, the entirely sharing user specifying information being information transmitted by the user equipment and being information as a basic value of information for specifying a user sharing the stored content marker information;
content marker output request acceptance means for accepting a content marker output request by receiving the content marker output request, the content marker output request being information transmitted by the user equipment and being information including user identification information for identifying a user and requesting to output content marker information;
content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information; and
content marker transmission means for transmitting the output content marker information to the user equipment having transmitted the content marker output request.

15. A content delivery method comprising;
accepting a content marker registration request, the content marker registration request including content marker information including content identification information for identifying content, and individually sharing user specifying information for specifying a user sharing the content marker information;
performing processing to store, in a storage device, the content marker information and the individually sharing user specifying information which are included in the accepted content marker registration request, in association with each other;
accepting entirely sharing user specifying information which is a basic value of information for specifying a user sharing the stored content marker information;
accepting a content marker output request which includes user identification information for identifying a user and requests to output content marker information; and
extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

16. An application server system comprising:
content marker information acceptance means for accepting a content marker registration request, the content marker registration request including content marker information including content identification information for identifying content, and individually sharing user specifying information for specifying a user sharing the content marker information;
content marker information storing means for performing processing to store, in a storage device, the content marker information and the individually sharing user specifying information which are included in the accepted content marker registration request, in association with each other;
entirely sharing user specifying information acceptance means for accepting entirely sharing user specifying information which is a basic value of information for specifying a user sharing the stored content marker information;
content marker output request acceptance means for accepting a content marker output request which includes user identification information for identifying a user and requests to output content marker information; and
content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

17. A computer-readable recording medium storing a program for causing an application server system to realize:
content marker information acceptance means for accepting a content marker registration request, the content marker registration request including content marker information including content identification information for identifying content, and individually sharing user specifying information for specifying a user sharing the content marker information;
content marker information storing means for performing processing to store, in a storage device, the content marker information and the individually sharing user specifying information which are included in the accepted content marker registration request, in association with each other;
entirely sharing user specifying information acceptance means for accepting entirely sharing user specifying information which is a basic value of information for specifying a user sharing the stored content marker information;
content marker output request acceptance means for accepting a content marker output request which includes user identification information for identifying a user and requests to output content marker information; and
content marker output means for extracting content marker information corresponding to the user identification information from the stored content marker information, based on the user identification information included in the accepted content marker output request, the accepted entirely sharing user specifying information, and the stored individually sharing user specifying information, and outputting the extracted content marker information.

18. User equipment comprising:
content marker information transmission means for transmitting a content marker registration request, the content marker registration request including content marker information including content identification information for identifying content, and individually sharing user specifying information for specifying a user sharing the content marker information;
entirely sharing user specifying information transmission means for transmitting entirely sharing user specifying information which is a basic value of information for specifying a user sharing the content marker information;
content marker output request transmission means for transmitting a content marker output request which includes user identification information for identifying a user and requests to output content marker information; and
content marker list output means for receiving the content marker information and outputting the received content marker information.

19. A computer-readable recording medium storing a program for causing user equipment to realize:
content marker information transmission means for transmitting a content marker registration request, the content marker registration request including content marker information including content identification information for identifying content, and individually sharing user specifying information for specifying a user sharing the content marker information;
entirely sharing user specifying information transmission means for transmitting entirely sharing user specifying information which is a basic value of information for specifying a user sharing the content marker information;
content marker output request transmission means for transmitting a content marker output request which includes user identification information for identifying a user and requests to output content marker information; and
content marker list output means for receiving the content marker information and outputting the received content marker information.
